# EUROPÄISCHE PATENTSCHRIFT

(11) **EP 4 015 144 B1**
(45) Veröffentlichungstag und Bekanntmachung des Hinweises auf die Patenterteilung: **26.08.2026**
(21) Anmeldenummer: 21209247.2
(22) Anmeldetag: 19.11.2021
(51) Int. Cl.: B23Q 17/00, G05B 19/00, B23Q 1/00

(54) **ÜBERWACHUNGSANORDNUNG, SPANNSYSTEM MIT ÜBERWACHUNGSANORDNUNG UND VERFAHREN ZUR ÜBERWACHUNG EINER SPANNVORRICHTUNG MITTELS ÜBERWACHUNGSANORDNUNG**
MONITORING ARRANGEMENT, CLAMPING SYSTEM WITH MONITORING ARRANGEMENT AND METHOD FOR MONITORING A CLAMPING DEVICE BY MEANS OF A MONITORING ARRANGEMENT
DISPOSITIF DE SURVEILLANCE, SYSTÈME DE SERRAGE POURVU DE DISPOSITIF DE SURVEILLANCE ET PROCÉDÉ DE SURVEILLANCE D'UN DISPOSITIF DE SERRAGE AU MOYEN D'UN DISPOSITIF DE SURVEILLANCE

(30) Priorität: 21.12.2020 CH 16352020
(43) Veröffentlichungstag der Anmeldung: 22.06.2022
(73) Patentinhaber: Erowa AG, 5734 Reinach (CH)
(72) Erfinder: Hediger, Hans, 5734 Reinach (CH)
(74) Vertreter: Keller Schneider Patent- und Markenanwälte AG

(56) Entgegenhaltungen:
- EP-A1- 1 923 167
- EP-A1- 3 620 248
- WO-A1-2019/178629
- CN-A- 107 695 747
- DE-B4- 102008 052 809

## Beschreibung

Die vorliegende Erfindung bezieht sich auf eine gemäss dem Anspruch 1 ausgebildete Überwachungsanordnung, ein gemäss dem Anspruch 12 ausgebildetes Spannsystem mit Überwachungsanordnung und ein Verfahren zur Überwachung einer Spannvorrichtung mittels einer Überwachungsanordnung gemäss dem Anspruch 19.

Mit einer Überwachungsanordnung der hier zur Rede stehenden Art sollen insbesondere Spannvorrichtungen im Hinblick darauf überwacht werden, ob ein mittels der jeweiligen Spannvorrichtung festgespannter Werkstückträger -Palette- oder ein darin eingespanntes Werkstück korrekt und sicher festgespannt ist. Insbesondere soll eine Aussage über die Güte der Spannung gemacht werden können, wobei der oder die gemessenen Parameter drahtlos an einen Empfänger übermittelt werden sollen.

Aus der EP 3 391 991 A ist ein Spannfutter bekannt, welches zum Festspannen von mit einem Spannzapfen versehenen Paletten ausgebildet ist. Das Spannfutter ist mit einer Aufnahmeöffnung für den Spannzapfen und einer Spannorgane aufweisenden Spannvorrichtung zum Festspannen des Spannzapfens in der Aufnahmeöffnung versehen. Am Spannfutter ist zumindest ein Sensor angeordnet, mittels welchem zumindest ein Parameter des Spannfutters und/oder des Zusammenwirkens zwischen Palette und Spannfutter und/oder der Palette erfassbar ist/sind. Das Spannfutter ist mit einem Sender zur drahtlosen Übertragung von mittels des Sensors bzw. der Sensoren ermittelten Parametern versehen. Mittels eines ersten Sensors kann die auf den Spannzapfen einwirkende Spannkraft ermittelbar werden. Dazu ist der erste Sensor derart ausgebildet und am Spannfutter angeordnet, dass beim Festspannen einer Palette materialelastische Verformungen des Spannfutters messbar sind. Das Spannfutter kann zudem mit einem zweiten Sensor versehen sein, mittels welchem das Aufliegen einer Palette auf dem Spannfutter erkennbar ist.

Aus der EP 1 998 932 B1 ist ein Spannfutter mit einem drei Spannbacken aufweisenden Spannkopf bekannt. Das Spannfutter besitzt einen rotationssymmetrischen Grundkörper mit einer konischen Aufnahmeöffnung zur Aufnahme des Spannkopfs. Um das Spannfutter in die Aufnahmeöffnung hineinzuziehen ist ein Zugrohr vorgesehen, das Teil einer Maschinenspindel ist. Derartige Spannfutter kommen insbesondere in Drehmaschinen zum Einsatz. An der Aussenoberfläche des Futterkörpers ist ein erster Sensor vorgesehen, während in einer Vertiefung an der Aussenoberfläche des Futterkörpers ein zweiter Sensor angeordnet ist. Schliesslich ist am Zugrohr ein dritter Sensor angeordnet. Die Sensoren sind als Dehnmessstreifen ausgeführt und jeweils mit einer integrierten Signalverarbeitungseinheit ausgerüstet. Jeder Signalverarbeitungseinheit ist eine Übertragungseinrichtung zur drahtlosen Übertragung der Messwerte zugeordnet. Mit dieser Ausbildung eines Spannfutters soll die Spannkraft des Spannfutters ermittelt werden können. Bei Erreichen einer Mindestspannkraft muss eine Wartung des Spannfutters vorgenommen werden. Eine Positionierung des Werkstücks in Axialrichtung wird nicht überwacht und kann auch nicht festgestellt werden. Eine Werkstück-Anwesenheitsmeldung fehlt. Zudem werden Fehler, die bei der drahtlosen Übertragung allenfalls entstehen können, nicht erkannt.

Aus der EP 2 052 808 A1 ist eine Spanneinrichtung mit einem Spannfutter zum lösbaren Fixieren eines Werkstückträgers bekannt. Das Spannfutter ist mit einem Verriegelungsmechanismus versehen, der mehrere Spannelemente umfasst, welche in der Verriegelungsstellung an einem mit dem Werkstückträger verbundenen Spannzapfen angreifen. Jedes Spannelement ist mit einer Durchgangsbohrung versehen, welche bei korrekter Verriegelung des jeweiligen Spannelements einseitig verschlossen ist. Zusätzlich oder alternativ ist jedem Spannelement ein mit einer Durchgangsbohrung versehenes Betätigungselement zugeordnet, dessen Durchgangsbohrung bei korrekter Verriegelung und/oder Entriegelung des zugehörigen Spannelements einseitig verschlossen ist. Die Durchgangsbohrungen der Spannelemente bzw. der Betätigungselemente sind über eine gemeinsame Verbindungsleitung mit einer pneumatischen Quelle verbunden. In der Verbindungsleitung ist zumindest ein Sensor zum Erfassen der Luftströmung vorgesehen. Mittels des Sensors kann erkannt werden, ob die Spannelemente korrekt entriegelt bzw. verriegelt wurden. Der Sensor ist mit einer elektronischen Steuer- und Auswertevorrichtung verbunden.

Die WO2019/178629 offenbart eine Vorrichtung und ein Verfahren zur Radpositionserkennung. Die Vorrichtung umfasst eine Messvorrichtung (1) zur Vermessung eines Versatzes der Rotationsachse (32) und/oder der Lage eines zur Bearbeitung in einer Aufspanneinheit (2) gespannten Kfz-Rades (3). Zum Festspannen des Kfz-Rades (3) besitzt die Aufspanneinheit (2) radial bewegliche Spannelemente (30). Die Messvorrichtung (1) weist eine Messmittelaufnahme (4) mit einem Aktor (11) und ein damit gekoppeltes Messmittel (6) zum Messen des genannten Versatzes der Rotationsachse (32) auf. Auf der Oberseite des Aktors (11) ist ein Messkopf (5) beweglich angeordnet. Der Messkopf ist auf der Oberseite des höhenverstellbaren Aktors (11) derart angeordnet, dass er in der hochgefahrenen Messposition durch Kontaktierung des Kfz-Rades in Querrichtung ausgelenkt wird. Das Messmittel (6) ist derart eingerichtet, dass damit die Vermessung des Versatzes (10) der Rotationsachse (32) anhand von Positionskoordinaten des Mittellochs (31) des Kfz-Rades (3) in zumindest Querrichtung (13) und/oder die Position des Mittellochs in Axialrichtung (14) relativ zur Aktorlängsachse (12) bestimmt werden kann. Gemäss einem Ausführungsbeispiel verfügt das Messmittel (6) über ein Sensorelement (7) zur Ermittlung einer Vertikalauslenkung bzw. Vertikalverschiebung (28) des Aktors (11). Dieses als Längenmesselement (26) ausgebildete Messmittel (6) kann zur Ermittlung der Lage des Kfz-Rades (3) verwendet werden. Das Messmittel (6) der Messvorrichtung (1) verfügt zudem über eine drahtlose Kommunikationsvorrichtung (22) zur Übertragung der Positionskoordinaten des Mittellochs (31) als Vermessungsdaten an eine Anlagensteuervorrichtung (23).

Aus EP 1 923 167 A1 geht ein schwenkbarer Werkstücktisch für Bearbeitungsmaschinen mit einer Steuervorrichtung zur Steuerung und Überwachung einer Spannvorrichtung hervor. Der Werkstücktisch (10) ist mit einer fluidischen Spannvorrichtung (17) zum Festspannen einer ein Werkstück (15) tragenden Werkstückpalette (16) versehen. Zum Erfassen der Winkelposition des Werkstücktischs (10) sind zwei Sensoren (19), (20) vorgesehen. Die Ausgänge der Sensoren (19), (20) sind mit zwei separaten Controllern (21), (22) einer Maschinensteuerung verbunden, so dass eine redundante zweikanalige Auswertung der Schwenkposition des Werkstücktischs (10) ermöglicht wird. Die Spannvorrichtung (17) umfasst einen in einer Zylinderkammer angeordneten Spannzylinder (29). Das Ansteuern der Spannvorrichtung (17) erfolgt über eine Ventilanordnung (24), welche zwei fluidische Ventile (25), (26) umfasst, wobei das eine Ventil (25) mit der linken Zylinderkammer (28) verbunden ist, während das andere Ventil (26) mit der rechten Zylinderkammer (30) des Spannzylinders verbunden ist. Die beiden Ventile (25), (26) werden simultan angesteuert, sodass die Ventilanordnung (24) gleichzeitig eine Art redundante Sicherheitseinrichtung wirken soll. An der Spannvorrichtung (17) sind erste Sensoren zum Erfassen der Winkelposition des Werkstücktischs, und weitere Sensoren zum Messen eines anstehenden Hydraulikdrucks angeordnet.

Des Weiteren ist aus der EP 2 759 372 A1 eine Spanneinrichtung für eine Werkzeugmaschine bekannt. Die Werkzeugmaschine weist eine drehbare Spindel mit einer Werkzeugaufnahme für ein Werkzeug auf. Zum Festspannen des Werkzeugs ist eine Spanneinrichtung vorgesehen. Um ein korrektes bzw. nicht korrektes Festspannen des Werkzeugs in der Werkzeugaufnahme zu erkennen, weist die Spanneinrichtung an unterschiedlichen Messorten Kraft-Sensoren auf, um die jeweils an unterschiedlichen Messorten wirkenden Spannkräfte zu Erfassen. Die Kraft-Sensoren sind an einer ringförmigen Anlagefläche der Werkzeugaufnahme angeordnet. Die Sensoren stehen dabei derart über die Anlagefläche vor, dass sie beim Festspannen des Werkzeugs zusammengedrückt werden. Auf diese Weise soll einerseits die Spannkraft erfasst werden können und es soll erkannt werden, ob das Werkzeug korrekt gespannt ist oder ob ggf. eine Fehlausrichtung und/oder Fehlpositionierung vorliegt. Als Kraft-Sensoren kommen AOW-Sensoren (akustische Oberflächenwellen-Sensoren) zum Einsatz. Die Kraft-Sensoren sind an der Anlagefläche drehsymmetrisch um die Mittelachse der Werkzeugmaschine angeordnet. Bei korrekter Ausrichtung des Werkzeugs erfassen die Kraft-Sensoren gleichgrosse Spannkräfte, während bei einem schräg eingespannten Werkzeug unterschiedlich grosse Spannkräfte von den Kraft-Sensoren erfasst werden. Die elektrischen Signale der Sensoren werden drahtlos an eine Sende- und Empfangseinheit übertragen und in einer Auswerteeinheit ausgewertet.

Aus der EP 2 093 016 A1 geht eine intelligente Mehrteile-Spannvorrichtung hervor. Die Spannvorrichtung besteht aus einer Vielzahl von auf einer Grundplatte angeordneten Spannbacken, wobei jeweils eine feste und eine verschiebbare Spannbacke eine Art Schraubstock bilden. In den Spannbacken sind Werkstückauflage-Sensoren oder Stauluft-Werkstück-Auflagekontrollen angeordnet, wobei erstere über Kabel mit einem Funkmodul verbunden sind. Mittels der Sensoren soll ein korrektes Einlegen von Werkstücken in die Spannbacken überwacht werden können.

Die EP 3 028 804 A1 beschreibt eine Übertragungsanordnung, insbesondere zur Energie- und/oder Signalübertragung und zur Verwendung in einem Bearbeitungszentrum. Dabei werden Signale und Spannungen induktiv von einem festen Maschinen-Gestell zu einem rotierenden Spannfutter, sowohl in Richtung des Spannfutters als auch umgekehrt übertragen. Das jeweilige Spannfutter besitzt Spannbacken, welche mittels eines Elektromotors verfahrbar in einem Futterkörper abgestützt sind. Die Elektromotoren werden bei Erreichen einer vorgegebenen IST-Position abgeschaltet, während die Spannbacken mittels Federpaketen und mechanischen Reibbremsen arretiert werden. Die Elektromotoren drücken die Federpakete während des Spannvorganges zusammen, so dass diese die Spannkraft für die Spannbacken aufbringen. Nach dem Abschalten der Elektromotoren verhindern die mechanischen Reibbremsen ein Verrutschen oder Lösen der Spannbacken. Darüber hinaus werden die Positionen der Spannbacken während des Bearbeitungsvorganges permanent überwacht, um Bearbeitungsfehler oder gar ein Lösen des eingespannten Werkstückes zu erkennen. Um die entsprechenden Betriebszustände und Positionen der Spannbacken bzw. Elektromotoren permanent überwachen zu können, ist diesen eine Vielzahl von Messsensoren zugeordnet, die entsprechende Messdaten generieren und diese über die induktiven Übertragungseinrichtungen übertragen. Die induktiven Übertragungseinrichtungen sind zweiteilig ausgestaltet sind, einerseits in dem rotierenden Spannfutter und andererseits in dem feststehenden Traggestell. Die beiden Übertragungseinrichtungen sind fluchtend zueinander ausgerichtet, so dass durch die räumliche Trennung der beiden Übertragungseinrichtungen eine Rotation des Spannfutters möglich ist und gleichzeitig eine induktive Übertragung von Messsignalen, Messdaten und/oder Spannungen für den Betrieb der Elektromotoren übertragen werden können.

Die EP 3 620 248 A1 zeigt eine Kopplungs-Einrichtung, mittels welcher Daten induktiv von einem drehbaren auf ein drehfest angeordnetes Teil übertragen werden können. Namentlich soll mittels der Kopplungs-Einrichtung ein während des Betriebs rotierendes Spannfutter an eine kundenseitige Steuerungseinrichtung angeschlossen und überwacht werden können. Das Spannfutter weist radial verfahrbare Spannbacken auf, um damit ein Werkstück zu fixieren. Jede Spannbacke wird mittel eines zugeordneten Elektromotors angetrieben. Um das während des Bearbeitungsvorgangs eines eingespannten Werkstücks rotierende Spannfutter mit Energie zu versorgen, ist in dem Spannfutter eine erste Übertragungseinrichtung vorgesehen, die über elektrische Leitungen mit den Elektromotoren und Messsensoren verbunden ist. Durch die Messsensoren sollen die Position der Spannbacken und die Spannungen der Elektromotoren bzw. deren Drehzahl gemessen werden. An einem Traggestell ist eine zweite, drehfest angeordnete Übertragungseinrichtung angebracht. Die Messdaten werden induktiv von der ersten rotierbaren an die zweite drehfest angeordnete Übertragungseinrichtung übertragen. Die zweite Übertragungseinrichtung ist mittels elektrischen Leitungen an eine programmierbare Schnittstelle angeschlossen. Bei einer Variante des Spannfutters ist vorgesehen, dass dieses mit zwei mit der zweiten Übertragungseinrichtung verbundenen Schnittstellen versehen ist. Beide Schnittstellen erhalten unabhängig voneinander die Messdatensätze der Messsensoren und werten diese aus. Sofern die Messergebnisse beider Schnittstellen übereinstimmen, erhält die Steuerungseinrichtung ein Freigabesignal, während bei abweichenden Messergebnissen der Bearbeitungsprozess unterbrochen wird bzw. nicht freigegeben wird.

Schliesslich offenbart die EP 2 457 688 A1 ein Verfahren zur Werkstück-Positionierung und Fixierung. Mittels Verfahrensschritten kann die Anwesenheit bzw. Nichtanwesenheit von Werkstücken oder Werkstückträgern festgestellt werden.

Aufgabe der Erfindung ist es, eine dem eingangs genannten technischen Gebiet zugehörende Überwachungsanordnung zum Überwachen der Spanngüte eines in einer Spannvorrichtung eingespannten Werkstückträgers oder Werkstücks zu schaffen, welche ermöglicht, dass ein oder mehrere Parameter, insbesondere solche Parameter, die einen Rückschluss auf ein sicheres Festspannen des eingespannten Werkstückträgers oder Werkstücks ermöglichen, einerseits zuverlässig erfasst werden und andererseits ohne Datenleitungen sicher an einen Empfänger übermittelt werden können.

Die Lösung der Aufgabe ist durch die Merkmale des Anspruchs 1 definiert. Gemäss der Erfindung umfasst die Überwachungsanordnung zum Überwachen der Spanngüte eines in einer Spannvorrichtung eingespannten Werkstückträgers oder Werkstücks zumindest zwei Sensoren zum unabhängigen Erfassen der Spanngüte eines eingespannten Werkstückträgers oder Werkstücks, wobei die Sendeeinrichtung derart ausgebildet ist, dass sie den oder die ermittelten oder berechneten Parameter redundant an die Empfangseinrichtung übermittelt. Indem zumindest zwei Sensoren zum unabhängigen Erfassen der Spanngüte eines eingespannten Werkstückträgers oder Werkstücks vorgesehen sind, können Fehler, welche ein einzelner Sensor liefern könnte, beispielsweise durch Quervergleich der Messdaten, erkannt werden. Durch ein redundantes Übertragen der Messdaten mittels einer Sendeeinrichtung an eine Empfangseinrichtung können auch Fehler auf der Übertragungsstrecke erkannt und ggf. eliminiert werden.

Bevorzugte Ausführungsformen und Weiterbildungen der Überwachungsanordnung sind in den abhängigen Ansprüchen 2 bis 13 umschrieben.

So ist bei einer bevorzugten Weiterbildung vorgesehen, dass die Überwachungsanordnung zumindest ein Sensormodul aufweist, mittels welchem/welchen die an den Sensoren anstehenden Messwerte digitalisiert und an die Sendeeinrichtung übermittelt werden. Eine derartige Aufbereitung der Messdaten erhöht die Sicherheit und vereinfacht die Übertragung der Messwerte an die Sendeeinrichtung. Zudem kann das jeweilige Sensormodul ggf. auch zum Speisen eines Sensors oder mehrerer Sensoren genutzt werden.

Bei einer besonders bevorzugten Weiterbildung der Überwachungsanordnung ist die Sendeeinrichtung mit zwei unabhängigen Mikroprozessoreinheiten versehen, die konfiguriert sind, um die von dem jeweiligen Sensormodul übermittelten Messwerte jeweils unabhängig und redundant aufzubereiten. Diese Ausbildung trägt einerseits dazu bei, Fehler in einer Messung sofort zu erkennen und ggf. zu überprüfen, ob eine Messung plausibel ist. Andererseits können unterschiedliche und unabhängige Mikroprozessoren auch unterschiedlich programmiert werden können, was in Bezug auf eine redundante Messdatenerfassung und Verarbeitung vorteilhaft ist.

Vorzugsweise umfasst die Sendeeinrichtung zumindest eine Sendeantenne zur Übermittlung der mittels der zwei unabhängigen Mikroprozessoreinheiten aufbereiteten Messdaten. Mit der Sendeantenne können die Messdaten drahtlos an die Empfangseinrichtung übermittelt werden und die genannten Komponenten können in einem kompakten und stromsparenden Bauelement zusammengefasst werden.

Ganz besonders bevorzugt umfasst die Überwachungsanordnung zumindest zwei Sensoren die derart angeordnet sind, dass deren Messwerte positiv miteinander korrelieren. Dies ermöglicht eine besonders einfache Überprüfung der Messwerte im Hinblick auf deren Richtigkeit, da die erfassten Messwerte durch einen Quervergleich miteinander verglichen werden können.

Besonders bevorzugt umfasst die Überwachungsanordnung zumindest zwei Sensoren die derart ausgebildet und angeordnet sind, dass beim Festspannen eines Werkstückträgers oder eines Werkstücks materialelastische Verformungen eines Spannfutters oder Schraubstocks der Spannvorrichtung messbar sind, wobei die Sensoren insbesondere Dehnungsmesstreifen-Sensoren (DMS) sind. DMS-Sensoren zeichnen sich durch ihre hohe Genauigkeit und gute Langzeitstabilität aus, so dass durch die genannte Anordnung der Sensoren sehr einfach Rückschlüsse in Bezug auf die tatsächlich anstehende Spannkraft gezogen werden können.

Eine bevorzugte Weiterbildung der Überwachungsanordnung dient der Überwachung einer Spannvorrichtung mit zumindest einem Spannfutter, welche letzteres im Innenraum einen in Z-Richtung verschiebbaren Betätigungskolben zum Betätigen von Spannorganen zum Festspannen eines Spannzapfens aufweist, wobei die Überwachungsanordnung zumindest zwei berührungslos arbeitende Sensoren aufweist, mittels welchen unabhängig voneinander zumindest zwei Positionen, vorzugsweise zumindest drei Positionen des Betätigungskolbens erfassbar sind. Diese Ausbildung ermöglicht es, mit zwei Sensoren zuverlässig unterschiedliche Zustände des Spannfutters zu überwachen, wobei ganz besonders bevorzugt Induktivsensoren zum Einsatz kommen.

Bei einer weiteren bevorzugten Weiterbildung umfasst die Überwachungsanordnung zumindest einen weiteren Sensor, mittels welchem das Aufliegen des Werkstückträgers auf der Spannvorrichtung erkennbar ist. Mittels eines solchen Sensors kann erkannt werden, ob der Werkstückträger tatsächlich in der vorgesehenen Position direkt auf den Z-Auflagen der Spannvorrichtung aufliegt, oder ob er auf einer Verschmutzung wie beispielsweise einem Span aufliegt und daher in Z-Richtung nicht korrekt positioniert ist.

Eine weitere Ausbildung der Überwachungsanordnung dient der Überwachung der Spanngüte eines in einem Schraubstock einer Spannvorrichtung eingespannten Werkstücks, wobei die Überwachungsanordnung bei diesem bevorzugten Beispiel zumindest zwei weitere Sensoren umfasst, mittels welchen das Aufliegen eines Werkstücks auf dem jeweiligen Führungsschlitten des Schraubstocks erkennbar ist. Auf diese Weise kann erkannt werden, ob das Werkstück korrekt oder beispielsweise schräg eingespannt ist.

Eine bevorzugte Weiterbildung der Überwachungsanordnung sieht zudem vor, dass diese mit einem weiteren Sensor versehen ist, mittels welchem die Position eines der Betätigung von Spannorganen dienenden Elements erkennbar ist. Diese Ausbildung ist insbesondere im Hinblick auf ein automatisches Zuführen oder eine automatische Entnahme des Werkstückträgers durch einen Roboter wichtig, da sich das genannte Element zur Betätigung der Spannorgane in seiner Ausgangs- bzw. Offenstellung befinden muss, damit ein Werkstückträger zugeführt bzw. entnommen werden kann.

Bei einer besonders bevorzugten Weiterbildung umfasst die Überwachungsanordnung eine Empfangsantenne zum Empfangen von mittels der Sendeeinrichtung übermittelten Daten und ein mit der Empfangsantenne verbundenes Gateway, wobei das Gateway mit zwei unabhängigen Mikroprozessoreinheiten versehen ist, mittels welchen die empfangenen Daten jeweils unabhängig und redundant weiterverarbeitet werden, und wobei das Gateway mit einer Maschinensteuerung einer Bearbeitungsmaschine verbunden ist. Diese Ausbildung trägt dazu bei, dass die Daten sicher empfangen und mittels des Gateways an die Maschinensteuerung der Bearbeitungsmaschine übergeben werden können.

Bei einer besonders bevorzugten Weiterbildung der Überwachungsanordnung verarbeitet das Gateway die von der Sendeeinrichtung übermittelten Messwerte derart, dass bei Feststellung einer Übereinstimmung der erfassten Messwerte und Erreichen von vorbestimmten Messwerten der Maschinensteuerung ein Signal für einen korrekt festgespannten Werkstückträger oder ein korrekt festgespanntes Werkstück und/oder für einen sicheren Betrieb einer Werkzeugmaschine redundant an die Maschinensteuerung ausgegeben wird. Dadurch kann ein sicherer Betrieb der Bearbeitungsmaschine sichergestellt werden, indem nur dann ein Freigabesignal ansteht, wenn der Werkstückträger bzw. das Werkstück sicher und korrekt festgespannt ist.

Eine weitere Aufgabe der Erfindung besteht darin, ein Spannsystem mit einer Spannvorrichtung zum Festspannen eines Werkstückträgers oder eines Werkstücks und einer nach einem der vorhergehenden Ansprüche ausgebildeten Überwachungsanordnung derart weiterzubilden, dass zuverlässig erkannt werden kann, ob der Werkstückträger bzw. das Werkstück sicher festgespannt ist.

Diese Aufgabe wird mit einem Spannsystem gemäss dem Anspruch 14 gelöst. Indem die Überwachungsanordnung des Spannsystems mit zumindest zwei an der Spannvorrichtung angeordneten Sensoren zum unabhängigen Erfassen der auf einen eingespannten Werkstückträger bzw. ein eingespanntes Werkstück einwirkenden Spannkraft versehen ist, werden die für ein sicheres Festspannen des Werkstückträgers bzw. Werkstücks relevanten Messwerte doppelt und unabhängig voneinander erfasst. Damit wird die Grundvoraussetzung geschaffen, dass zuverlässig erkannt werden kann, ob der Werkstückträger bzw. das Werkstück sicher festgespannt ist

Bevorzugte Weiterbildungen des Spannsystems sind in den abhängigen Ansprüchen 15 bis 20 definiert.

Vorzugsweise ist das Spannsystem derart ausgebildet, dass die Sendeeinrichtung der Überwachungsanordnung einen an der Spannvorrichtung angeordneten Funksender und die Empfangseinrichtung einen entfernt davon angeordneten Funkempfänger umfasst, wobei die Sendeeinrichtung zwei unabhängige Mikroprozessoreinheiten aufweist, die konfiguriert sind, um die von dem jeweiligen Sensormodul übermittelten Messwerte unabhängig und redundant aufzubereiten und durch Quervergleich der Messdaten auf deren Plausibilität zu überprüfen. Damit kann bereits senderseitig, d.h. in oder an der Spannvorrichtung, eine redundante Vorverarbeitung der Messdaten im Hinblick auf deren Plausibilität vorgenommen werden.

Gemäss einem besonders bevorzugten Ausführungsbeispiel des Spannsystems kommen als Sensoren Dehnungsmesstreifen zum Einsatz, welche derart kraft- und/oder stoffschlüssig an einem Spannfutter oder einem Schraubstock der Spannvorrichtung angebracht sind, dass deren Signal im Wesentlichen proportional zur Spannkraft ist. Da DMS eine hohe Genauigkeit und eine gute Langzeitstabilität besitzen, eignen sie sich besonders vorteilhaft, um über das Messen einer Materialverformung an dem Spannfutter oder Schraubstock eine genaue Aussage über die auf den Werkstückträger bzw. das Werkstück einwirkende Spannkraft, und damit die Güte der Spannung, zu machen.

Bei einer weiteren, bevorzugten Ausbildung des Spannsystems weist dessen Spannvorrichtung zumindest ein Spannfutter zum Festspannen eines Werkstückträgers auf, wobei das Spannfutter einen im Bereich der Oberseite angeordneten Sensor zum Erkennen des Aufliegens des Werkstückträgers umfasst. Über einen solchen Sensor kann die genaue Z-Position des Werkstückträgers ermittelt werden, was beispielsweise im Hinblick auf mögliche Verschmutzungen im Bereich der Z-Auflagen wichtig ist.

Eine besonders bevorzugte Weiterbildung des Spannsystems ist mit einem Spannfutter zum Festspannen eines mit einem Spannzapfen versehenen Werkstückträgers versehen, wobei das Spannfutter mit einem zwischen einer Ausgangs- und einer Verriegelungsstellung verschiebbaren Betätigungskolben zum Betätigen von Spannorganen zum Festspannen des Spannzapfens versehen ist und das Spannfutter mit einem weiteren Sensor zum Überwachen der Position des Betätigungskolbens versehen ist. Das Erkennen der Position des Betätigungskolbens ist insbesondere im Hinblick auf eine automatische Bestückung des Spannsystems mittels eines Handlingroboters wichtig, insbesondere um keine ungewollten Schäden zu verursachen.

Eine besonders bevorzugte Ausbildung des Spannsystem umfasst zumindest zwei Spannfutter zum Festspannen eines mit einer zu der Anzahl an Spannfuttern korrespondierenden Anzahl an Spannzapfen versehenen Werkstückträgers, wobei jedes Spannfutter mit einem zwischen einer Ausgangs- und einer Verriegelungsstellung verschiebbaren Betätigungskolben zum Betätigen von Spannorganen zum Festspannen des jeweiligen Spannzapfens versehen ist, und wobei zumindest ein Spannfutter mit einem weiteren Sensor zum Überwachen der Position des Betätigungskolbens versehen ist. Indem die Position von zumindest einem Betätigungskolben überwacht wird, kann ebenfalls eine Aussage im Hinblick darauf gemacht werden, ob grundsätzlich ein Werkstückträger zugeführt bzw. entnommen werden kann.

Bei einer alternativen Ausbildung des Spannsystems ist die Spannvorrichtung als Schraubstock mit zwei Spannbacken ausgebildet, wobei jeder Spannbacke ein Sensor zum Ermitteln der Spannkraft eines eingespannten Werkstücks zugeordnet ist. Indem von beiden Spannbacken die Spannkraft ermittelt wird, kann eine Aussage darüber gemacht werden, ob ein Werkstück sicher festgespannt ist oder nicht.

Schliesslich besteht eine weitere Aufgabe der Erfindung darin, ein Verfahren zur Überwachung einer Spannvorrichtung einer Bearbeitungsmaschine mittels einer nach einem der Ansprüche 1 bis 13 ausgebildeten Überwachungsanordnung, derart weiterzubilden, dass zuverlässig und auf einfache Weise ermittelt werden kann, ob die Güte der Spannung eines eingespannten Werkstückträgers oder Werkstücks einer bestimmten Vorgabe genügt, wobei anhand der Messwerte die Steuerung der Bearbeitungsmaschine und/oder eines zugeordneten Handlingroboters beeinflussbar ist.

Diese Aufgabe wird mit einem Verfahren gemäss dem Anspruch 21 gelöst. Indem mittels zumindest zweier unabhängiger Sensoren die Güte der Spannung eines in der Spannvorrichtung eingespannten Werkstückträgers oder Werkstücks ermittelt wird, dass die mittels des jeweiligen Sensors ermittelten Messdaten miteinander verglichen und auf Plausibilität überprüft werden, und dass der oder die ermittelten oder berechneten Parameter mittels der Sendeeinrichtung redundant an die Empfangseinrichtung übermittelt wird/werden und dass anhand der anstehenden Messwerte die Steuerung der Bearbeitungsmaschine beeinflusst wird, kann beim Bearbeiten eines mittels der Spannvorrichtung bzw. des Werkstückträgers auf der Bearbeitungsmaschine festgespannten Werkstücks die Sicherheit gewährleistet werden.

Bevorzugte Weiterbildungen des Verfahrens sind in den abhängigen Ansprüchen 22 bis 25 definiert.

Bei einem besonders bevorzugten Verfahren umfasst eine Überprüfung auf Plausibilität ein Prüfen auf Übereinstimmung der ermittelten und miteinander verglichenen Parameter nach deren Aufbereitung durch die zwei unabhängigen Mikroprozessoreinheiten der Sendeeinrichtung. Dadurch kann neben einer doppelten Erfassung der für ein sicheres Festspannen relevanten Messwerte auch eine redundante Auswertung sichergestellt werden.

Bei einer besonders bevorzugten Weiterbildung des Verfahrens werden der oder die ermittelten oder berechneten Parameter mittels der Sendeeinrichtung redundant und in Form von Datenpaketen an die Empfangseinrichtung übermittelt, wobei empfängerseitig überprüft wird, ob die übermittelten Daten plausibel sind. Dadurch sollen Fehler auf der Funkstrecke erkannt werden können.

Ein weiteres bevorzugtes Verfahren sieht vor, dass bei Übereinstimmung der ermittelten und miteinander verglichenen Parameter und Erreichen von vorbestimmten Messwerten mittels des Gateways ein Freigabesignal für sicheres Arbeiten erzeugt und redundant an die Steuerung der Bearbeitungsmaschine übermittelt wird. Somit steht nur dann ein Freigabesignal an, wenn die für einen sicheren Betrieb der Bearbeitungsmaschine notwendigen Voraussetzungen erfüllt sind, namentlich der Werkstückträger oder das Werkstück sicher festgespannt sind.

Schliesslich ist bei einer ganz bevorzugten Weiterbildung des Verfahrens vorgesehen, dass das Gateway das Freigabesignal in der Form eines binären Signals ausgibt, wobei das Freigabesignal den Wert 1 annimmt, wenn die erfassten Messwerte plausibel sind und einen vorbestimmten Wert erreichen, und wobei das Freigabesignal den Wert 0 annimmt, wenn die erfassten Messwerte entweder nicht plausibel sind oder einen vorbestimmten Wert nicht erreichen. Damit kann eine positive Sicherheit erreicht werden, indem das Freigabesignal nur dann den Wert 1 annimmt, wenn der Werkstückträger bzw. das Werkstück korrekt und sicher gespannt ist. Im Falle eines Defekts wie beispielsweise eines Stromausfalls nimmt das Freigabesignal automatisch den Wert 0 an, was von der Maschinensteuerung sofort erkannt wird und zu einem Stillstand der Maschine oder zumindest zu einer Fehlermeldung führt.

Die Figuren der zur Erläuterung von Ausführungsbeispielen verwendeten Zeichnungen zeigen:
- Fig. 1: eine erste Spannvorrichtung zusammen mit einer Überwachungseinrichtung in schematischer Darstellung;
- Fig. 2: eine zweite Spannvorrichtung zusammen mit einem Werkstückträger und einzelnen Komponenten der Überwachungseinrichtung in perspektivischer Ansicht;
- Fig. 3a: einen Schnitt durch die Spannvorrichtung gemäss Fig. 2 zusammen mit dem abgehoben dargestellten Werkstückträger;
- Fig. 3b: die Spannvorrichtung gemäss Fig. 3a zusammen mit dem daran festgespannten Werkstückträger im Schnitt;
- Fig. 3c: einen weiteren Schnitt durch die Spannvorrichtung gemäss Fig. 2 ohne Werkstückträger;
- Fig. 4: eine als Schraubstock ausgebildete dritte Spannvorrichtung zusammen mit einzelnen Komponenten der Überwachungseinrichtung in perspektivischer Ansicht;

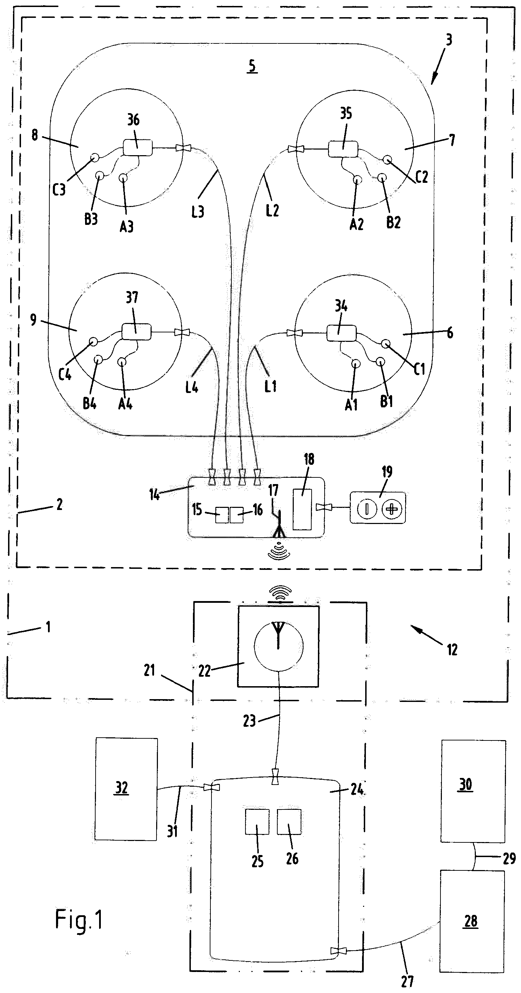

Die Fig. 1 zeigt eine Spannvorrichtung 3 zusammen mit einer Überwachungseinrichtung 12 in schematischer Darstellung. Mittels eines ersten Rechtecks 1 ist schematisch ein Maschinenraum angedeutet, in dem eine Bearbeitungsmaschine steht, auf welcher die Spannvorrichtung 3 zum Einsatz kommt. Mittels einer gestrichelten Linie 2 ist ein Spannsystem symbolisiert, welches die Spannvorrichtung 3 sowie einen Teil der Überwachungseinrichtung 12 umfasst. Die Spannvorrichtung 3 ist im vorliegenden Beispiel ein sogenanntes Vierfach-Spannfutter, bei dem auf einer Basisplatte 5 vier Spannfutter 6, 7, 8, 9 angeordnet sind. Das jeweilige Spannfutter besitzt eine zentrale Aufnahmeöffnung (nicht dargestellt) zur Aufnahme und zum Festspannen eines an einem Werkstückträger (nicht dargestellt) angeordneten Spannzapfens. Zum Festspannen eines Spannzapfens in der Aufnahmeöffnung ist das jeweilige Spannfutter 6, 7, 8, 9 mit einem Spannmechanismus versehen. Die Oberseite der vier Spannfutter bildet dabei die X-Y-Ebene des Spannfutters, während die sogenannte Z-Achse senkrecht dazu verläuft. Da derartige Spannfutter grundsätzlich bekannt sind, beispielsweise aus der EP 3391991 A oder der DE 102013014036 A1, sind die jeweiligen Spannfutter nur schematisch dargestellt und es wird nur auf einige im Zusammenhang mit der Erfindung relevante Merkmale eingegangen.

Die Überwachungseinrichtung 12 umfasst neben mehreren Sensoren zum Erfassen der Spanngüte eines eingespannten Werkstückträgers eine Sendeeinrichtung 14 sowie eine durch eine gestrichelte Linie angedeutete Empfangseinrichtung 21. Im vorliegenden Beispiel sind jedem Spannfutter 6, 7, 8, 9 drei Sensoren A1, B1, C1; A2, B2, C2; A3, B3, C3; A4, B4, C4 zugeordnet, deren Funktion anschliessend noch näher erläutert wird. Die drei Sensoren A1-C1, A2-C2, A3-C3, A4-C4 des jeweiligen Spannfutters 6, 7, 8, 9 sind mit je einem Sensormodul 34, 35, 36, 37 verbunden, in welchem eine Aufbereitung der mittels der zugehörigen Sensoren gemessenen Messwerte vorgenommen wird. Das jeweilige Sensormodul ist einerseits für die Speisung der Sensoren (Dehnungsmessstreifen bzw. Wheatstonesche Brückenschaltung, Induktivsensoren etc.) zuständig. Andererseits ist ein A/D-Wandler integriert, der die analogen Messsignale digitalisiert, so dass diese Messdaten über vergleichsweise wenige Leitungen L1-L4, im Idealfall über je eine Leitung pro Sensormodul 34, 35, 36, 37 digital an die Sendeeinrichtung 14 übermittelt werden können. Die Sendeeinrichtung 14 ist mit zwei unabhängigen Mikroprozessoreinheiten 15, 16 versehen, welche eine Vorverarbeitung der Messdaten vornehmen. Die beiden Mikroprozessoreinheiten 15, 16 sind vorzugsweise mit unterschiedlichen Mikroprozessoren versehen, um eine unabhängige und redundante Aufbereitung der Messdaten sicherzustellen. Die Sendeeinrichtung 14 ist zudem mit einem Funkmodul -Funksender- und einer Sendeantenne 17 zur drahtlosen Übertragung der Messdaten versehen. Im vorliegenden Beispiel ist eine Sendeantenne 17 zur Übermittlung der mittels der beiden Mikroprozessoreinheiten 15, 16 aufbereiteten Messdaten vorgesehen. Des Weiteren ist das Spannsystem 2 mit einem Beschleunigungssensor 18 versehen, der wie vorliegend dargestellt, im Bereich der Sendeeinrichtung 14 angeordnet sein kann.

Zur Speisung der Sendeeinrichtung 14 kommt eine Stromversorgung 19 vorzugsweise in Form von Batterien oder Akkus zum Einsatz, welche beispielsweise in einem separaten Batteriefach in der Spannvorrichtung 3 untergebracht werden kann, wobei weder die Batterien noch das Batteriefach näher dargestellt sind. Ggf. kann auch ein Netzteil, eine induktive Speisung oder eine Einrichtung zur Energieumwandlung aus der Umwelt (Energy Harvesting) vorgesehen werden.

Die entfernt von der Spannvorrichtung 3 angeordnete Empfangseinrichtung 21 -Funkempfänger- umfasst neben einer Empfangsantenne 22 ein Gateway 24 zur Aufbereitung der Daten. Unter dem allgemein bekannten und verwendeten Fachbegriff Gateway wird eine Übergabestelle als Vermittlungsgerät, insbesondere als Vermittlungsgerät in Rechnernetzen, bezeichnet. In der Informatik wird unter einem Gateway eine Komponente (Hard- und/oder Software) verstanden, welche zwischen zwei Systemen eine Verbindung herstellt. Das Gateway 24 weist ebenfalls zwei unabhängige Mikroprozessoreinheiten 25, 26 zum Auswerten der empfangenen Daten auf. Auch hier sind die beiden Mikroprozessoreinheiten 25, 26 vorzugsweise mit unterschiedlichen Mikroprozessoren versehen, um eine unabhängige und redundante Verarbeitung der empfangenen Messdaten sicherzustellen. Unterschiedliche und unabhängige Mikroprozessoren können auch mittels unterschiedlicher Software programmiert werden, was wiederum der Sicherheit dient.

Die Empfangsantenne 22 ist über eine erstes Kabel 23 mit dem Gateway 24 verbunden, welches seinerseits über ein zweites Kabel 27 mit einer Maschinensteuerung 28 verbunden ist. Die Maschinensteuerung 28 ist über ein drittes Kabel 29 mit einem Handlingroboter 30 verbunden. Das Gateway 24 ist zudem über ein viertes Kabel 31 mit einem Service Tool 32 verbunden. Obwohl das Gateway 24 hier ausserhalb der das Spannsystem symbolisierenden Linie 2 eingezeichnet ist, bildet es im Allgemeinen ebenfalls einen Bestandteil der Überwachungseinrichtung 12 und ist dem Spannsystem zugeordnet. Mittels des Handlingroboters 30 können der Spannvorrichtung 3 Werkstückträger oder Werkstücke zugeführt bzw. entnommen werden. Die Maschinensteuerung 28 steuert die Bearbeitungsmaschine, auf der die Spannvorrichtung 3 zum Einsatz kommt. Schliesslich dient das Service Tool als Werkzeug zur Kalibrierung und Diagnose. Obwohl die genannten Kabel 23, 27, 29, 31 vorgängig nur durch jeweils eine Linie schematisch dargestellt sind, steht der Begriff Kabel im vorliegenden Zusammenhang für jegliche Art von elektrischer Verbindung, wobei sowohl ein- als auch mehradrige elektrische Leitungen wie auch mehrere unabhängige Leitungen darunter zu verstehen sind. So ist das Gateway 24 beispielsweise über zumindest zwei Leitungen mit der Maschinensteuerung 28 verbunden, wie nachfolgend noch näher erläutert wird.

Das Gateway 24 empfängt mittels der Antenne 22 die von der Sendeeinrichtung 14 digital übermittelten Daten und wertet diese aus. Für die drahtlose Datenübertragung wird vorzugsweise eine standardisierte Schnittstelle wie beispielsweise Bluetooth, ZigBee oder ein proprietärer Funksender im Frequenzbereich von 2.4 GHz eingesetzt, wobei ganz besonders bevorzugt Bluetooth Low Energie (BLE) Funktechnik zum Einsatz kommt, wie nachfolgend noch näher erläutert wird.

Aufgrund der übermittelten Daten kann das Gateway 24 den Status der Spannvorrichtung wie beispielsweise Futter offen, keine Palette vorhanden, Palette aufgelegt, Palette gespannt, Palette mit 10kN gespannt etc. erkennen und diese an die Maschinensteuerung 28 oder ein damit verbundenes Prozessleitsystem weitergeben. Die Maschinensteuerung 28 oder das Prozessleitsystem können dem Handlingroboter 34 Befehle übermitteln, beispielsweise Werkstückträger an die Spannvorrichtung 3 übergeben oder Werkstückträger aus der Spannvorrichtung 3 entnehmen. Im Fall einer Störung oder des Erkennens einer ungenügenden mechanischen Spannung, insbesondere auch während des Bearbeitens eines auf der Spannvorrichtung 3 festgespannten Werkstückträgers, kann die jeweilige Bearbeitungsmaschine sofort gestoppt werden. Jedenfalls kann anhand der an den Sensoren anstehenden Messwerte die Steuerung der Bearbeitungsmaschine und/oder eines zugeordneten Handlingroboters beeinflusst werden.

Von den drei Sensoren pro Spannfutter 6, 7, 8, 9 dient jeweils ein erster Sensor A1, A2, A3, A4 dem Ermitteln der Spannkraft, mit dem ein Spannzapfen in dem jeweiligen Spannfutter festgespannt ist. Dazu kommt vorzugsweise ein Sensor auf der Basis von Dehnungsmessstreifen, nachfolgend DMS genannt, zum Einsatz, mittels welchem materialelastische Verformungen des Spannfutters, insbesondere des Gehäuses, gemessen werden können. Dadurch kann eine Aussage hinsichtlich derjenigen Kraft gemacht werden, mit der ein Spannzapfen in das jeweilige Spannfutter hineingezogen bzw. darin festgespannt wird.

Jeweils ein weiterer Sensor B1, B2, B3, B4 dient einerseits als Anwesenheitskontrolle für den Werkstückträger. Andererseits kann mittels des jeweiligen Sensors B1, B2, B3, B4 auch die genaue Z-Position des Werkstückträgers ermittelt werden. Dazu kommt vorzugsweise ein induktiv arbeitender Sensor zum Einsatz, der im Bereich der Oberseite des Spannfutters 6, 7, 8, 9 derart angeordnet ist, dass er das Vorhandensein bzw. Aufliegen eines Werkstückträgers erkennt.

Jeweils ein weiterer Sensor C1, C2, C3, C4 dient dem Überwachen der Position eines der Betätigung von Spannorganen dienenden Betätigungskolbens. Mittels des Betätigungskolbens können die zum Festspannen eines Spannzapfens dienenden Spannorgane -Spannkugeln- radial nach innen geschoben werden, so dass sich diese kraftschlüssig an dem Spannzapfen anlegen. Wenn die Spannorgane durch den Betätigungskolben radial nach innen geschoben sind, befindet sich dieser in der Verrieglungsstellung/Wirkstellung. Ist der Betätigungskolben in die Ausgangsstellung verschoben, so befinden sich die Spannorgane in der Offenstellung oder sie können zumindest in die Offenstellung zurückgeschoben werden. In der Offenstellung des Betätigungskolbens kann daher ein Spannzapfen in das Spannfutter eingeführt bzw. daraus entfernt werden, während in der Verrieglungsstellung des Betätigungskolbens sich die Spannorgane in der Spannposition befinden, in welcher ein Spannzapfen in dem Spannfutter festgespannt ist. Befindet sich der Betätigungskolben in der Verrieglungsstellung, kann ein Spannzapfen weder in das Spannfutter eingeführt noch daraus entnommen werden. Bei derartigen Spannfuttern wird der Betätigungskolben üblicherweise pneumatisch betätigt, wobei er pneumatisch in die Offenstellung bewegt wird, während er mittels Federkraft in die Verriegelungsstellung verschoben und mittels Selbsthemmung dort gehalten wird. Dies hat den Vorteil, dass das Spannfutter im drucklosen Zustand verriegelt ist, so dass der Werkstückträger auch ohne Druckluft sicher gespannt ist und bleibt.

Es versteht sich, dass keinesfalls drei Sensoren pro Spannfutter 6, 7, 8, 9 vorgesehen werden müssen, sondern dass es anforderungsgemäss genügen kann einen, zwei oder drei Sensoren pro Spannfutter vorzusehen. Ggf. ist es sogar ausreichend, nur an zwei der vier Spannfutter jeweils einen Sensor vorzusehen. In einem solchen Fall würde vorzugsweise an zwei einander diagonal gegenüberliegenden Spannfuttern 6, 8 bzw. 7, 9 jeweils ein Sensor angeordnet, mittels welchem die Spannkraft gemessen werden kann, mit der der jeweilige Spannzapfen in dem Spannfutter festgespannt ist.

Schliesslich dient der Beschleunigungssensor 18 der Bestimmung der Lage der Spannvorrichtung 3. Zudem können mit dem Beschleunigungssensor 18 auch Bewegungen der Spannvorrichtung 3 überwacht werden. So können beispielsweise Vibrationen, die beim Bearbeiten eines Werkstücks entstehen, kontinuierlich überwacht werden und bei Erkennen einer Überschreitung eines Grenzwerts kann der Bearbeitungsvorgang sofort gestoppt werden.

Die für die Funkübertragung besonders bevorzugt eingesetzte Bluetooth Low Energy (BLE) Technik benötigt für die Übertragung sehr wenig Energie und hat eine Reichweite von ca. 10 Metern. Zudem ist BLE eine international genormte und dadurch weltweit einsetzbare Funkschnittstelle mit einer Frequenz von 2.4 GHz. Da BLE beispielsweise auch bei Smartphones verwendet wird, werden die entsprechenden Komponenten in sehr hohen Stückzahlen gefertigt und sind daher kostengünstig erhältlich. Dadurch könnte beispielsweise auch ein Smartphone mit dem Spannfutter kommunizieren. Damit hat diese Technik, beispielsweise auch im Vergleich mit der bei der EP 3 028 804 A1 eingesetzten induktiven Übertragung, sehr viele Vorteile.

Nachfolgend werden einige mögliche Funktionsweisen der Überwachungseinrichtung erläutert.

### Beispiel 1

In diesem Beispiel wird davon ausgegangen, dass pro Spannfutter 6, 7, 8, 9 nur jeweils ein Sensor, namentlich ein DMS-Sensor A1, A2, A3, A4 zum Messen der anstehenden Spannkraft vorgesehen ist.

Nachdem ein Werkstückträger (nicht dargestellt) in der Spannvorrichtung 3 festgespannt ist, werden die mittels den DMS-Sensoren A1, A2, A3, A4 gemessenen und in den

Sensormodulen 34, 35, 36, 37 digitalisierten Daten in den beiden Mikroprozessoreinheiten 15, 16 der Sendeeinrichtung 14 parallel verarbeitet. Dabei werden die Messdaten der verschiedenen Sensoren mittels beiden Mikroprozessoreinheiten 15, 16 unabhängig voneinander verarbeitet und durch Quervergleich der Messdaten auf deren Plausibilität überprüft. Die an den vier DMS-Sensoren A1, A2, A3, A4 anstehenden Messwerte dürfen jeweils höchstens um einen vorbestimmten Wert voneinander abweichen. Sofern die ermittelten Messwerte innerhalb eines vorgegebenen Toleranzfensters liegen, werden die Messwerte mittels der Sendeeinrichtung 14 an die Empfangseinrichtung 21 übermittelt. Weichen die Messwerte jedoch zu stark voneinander ab, so kann bereits senderseitig erkannt werden, dass ein Fehler vorliegt und ggf. kann eine Fehlermeldung ausgegeben werden, wobei die Messwerte trotzdem an die Empfangseinrichtung 21 übermittelt werden können.

Neben dem vorgängig angesprochenen Quervergleich der Messwerte, mittels welchem die Plausibilität der Messwerte ermittelt wird, wird natürlich auch die absolute Messgrösse herangezogen, um zu bestimmen, ob ein Werkstückträger bzw. ein Werkstück korrekt und mit der notwendigen Spannkraft festgespannt ist.

Vorzugsweise werden die gemessenen oder ermittelten Daten vor der Übertragung auf Plausibilität überprüft und nach der Übertragung nochmals auf Plausibilität überprüft.

Indem positiv miteinander korrelierende Messdaten wie die mittels der DMS-Sensoren A1, A2, A3, A4 gemessenen Spannkräfte mittels den beiden Mikroprozessoreinheiten 15, 16 verglichen und auf Plausibilität überprüft werden, kann bereits in der Sendeeinrichtung 14 eine Vorverarbeitung der Messdaten vorgenommen und ggf. eine reduzierte Datenmenge an die Empfangseinrichtung 21 übermittelt werden. Sofern die gemessenen Daten plausibel sind, werden diese mittels der Sendeeinrichtung 14 an die Empfangseinrichtung 21 übermittelt, während bei Erkennen von nicht plausiblen Messdaten eine Fehlermeldung übermittelt wird. Ggf. können zusätzlich zu einer Fehlermeldung auch noch die Messdaten übermittelt werden. Es können entweder die eigentlichen Messwerte, namentlich die Spannkraft, mit der der jeweilige Spannzapfen im Spannfutter festgespannt ist, übermittelt werden oder alternativ kann auch eine reduzierte Datenmenge im Sinne von Spannung ok übermittelt werden, sofern die Messwerte plausibel sind. Ggf. kann es auch genügen, nur die Messwerte von zwei einander diagonal gegenüberliegenden Sensoren zu Erfassen und auf Plausibilität zu überprüfen. Indem jedoch die Daten sämtlicher vier DMS-Sensoren A1, A2, A3, A4 ermittelt und auf Plausibilität überprüft werden, kann zudem auch sichergestellt werden, dass an dem Werkstückträger sämtliche vier Spannzapfen vorhanden sind und keiner fehlt.

Um bei der Übertragung auf der Funkstrecke Fehler zu vermeiden, welche beispielsweise durch ein Verfälschen von Nachrichten, ein unbeabsichtigtes Wiederholen von Nachrichten, eine falsche Reihenfolge von Nachrichten, ein Verlust von Nachrichten, eine zeitliche Verzögerung von Nachrichten, ein Einfügen von falschen Informationen z.B. durch Störung oder durch einen falschen Absender, entstehen können, müssen entsprechende Vorkehrungen getroffen werden.

Vorzugsweise werden die Messdaten redundant und in Form von digitalen Datenpaketen übermittelt. Dabei kann das jeweilige Datenpaket mit einer verwechslungssicheren Kodierung versehen, so dass empfängerseitig eine entsprechende Zuordnung vorgenommen werden kann.

Auf der Empfängerseite werden die Datenpakete von der Antenne empfangen und mittels der beiden Mikroprozessoreinheiten 25, 26 des Gateways 24 ausgewertet. Vorzugsweise werden die übermittelten Messdaten auch empfängerseitig durch einen Quervergleich auf Plausibilität überprüft. Neben dem Quervergleich müssen zusätzlich auch die absoluten Messwerte herangezogen werden, um zu entscheiden, ob die Spannung korrekt ist oder nicht.

Um eine positive Sicherheit zu gewährleisten, wird im Falle des Erkennens eines korrekten Spannens von dem Gateway 24 ein Spannungssignal -Freigabesignal- erzeugt, welches von der Maschinensteuerung überwacht wird. Korrekt gespannt heisst, dass einerseits die Plausibilität der anstehenden Messwerte durch Quervergleich erkannt und andererseits eine vorbestimmte Mindestspannkraft erreicht wird. Vorzugsweise gibt das Gateway das Freigabesignal in der Form eines binären Signals aus, wobei das Freigabesignal den Wert 1 annimmt, wenn die erfassten Messwerte plausibel sind und einen vorbestimmten Wert erreichen, und wobei das Freigabesignal den Wert 0 annimmt, wenn die erfassten Messwerte entweder nicht plausibel sind oder einen vorbestimmten Wert nicht erreichen. Mittels den beiden Mikroprozessoreinheiten 25, 26 des Gateways 24 werden unabhängig voneinander zwei Freigabesignale mit dem Wert 1 erzeugt, wenn beide Mikroprozessoreinheiten 25, 26 ein korrektes Festspannen erkennen. Die Maschinensteuerung ist über zwei Leitungen zur Übermittlung des Freigabesignals mit dem Gateway 24 verbunden und nur wenn das Freigabesignal beider Leitungen den Wert 1 annimmt, wird von der Maschinensteuerung 28 auf korrektes Festspannen erkannt. Somit wird das Freigabesignal redundant -doppelt- an die Maschinensteuerung 28 übertragen.

Wenn das Gateway 24 erkennt, dass unzulässige Fehler auf der Übertragungsstrecke auftreten, wird ebenfalls ein Fehler erzeugt und das Freigabesignal nimmt den Wert 0 an. Dies würde dann dazu führen, dass die Maschinensteuerung die Bearbeitungsmaschine stoppt. Im Falle eines Defekts der Empfangseinrichtung -Elektronik- oder einer sonstigen Störung wie beispielsweise eines Stromausfalls oder unplausiblen Messwerten würde das Freigabesignal ebenfalls den Wert 0 annehmen, wodurch die Maschinensteuerung 28 die Bearbeitungsmaschine wiederum stoppen würde.

Besonders bevorzugt werden die Daten bei der drahtlosen Übermittlung mit redundanten Informationen angereichert, um Verfälschungen und/oder Fehler zu erkennen. Durch die getroffenen Massnahmen können Fehler und/oder Verfälschungen schon früh erkannt werden und nicht erst ganz am Schluss.

Obwohl vorgängig jeweils von Sendeeinrichtung 14 und Empfangseinrichtung 21 gesprochen wird, findet nicht ausschliesslich eine unidirektionale Datenübertragung von Sendeeinrichtung 14 zu Empfangseinrichtung 21 statt, sondern es können auch in umgekehrter Richtung Daten übertragen werden, wie vorgängig erläutert wurde.

Jedenfalls werden mit der erfindungsgemäss gestalteten Überwachungseinrichtung die für eine sichere Spannung relevanten Messdaten bzw. Parameter doppelt, d.h. redundant erfasst, diese Messdaten werden senderseitig mittels den beiden unabhängigen Mikroprozessoreinheiten 15, 16 mittels Quervergleich auf Plausibiltät überprüft, danach redundant übermittelt, empfängerseitig wiederum mittels den beiden unabhängigen Mikroprozessoreinheiten 25, 26 des Gateways 24 gegengeprüft und redundant ausgewertet und schliesslich wiederum redundant an die Maschinensteuerung 28 übermittelt. Bei jedem dieser Schritte ist somit eine zweifache Sicherheit eingebaut, so dass letztlich die ganze Messkette inkl. der drahtlosen Übertragung sicher und zuverlässig funktioniert.

### Beispiel 2

In diesem Beispiel werden die Messdaten sämtlicher Sensoren der Spannvorrichtung 3 erfasst. Vorzugsweise werden jeweils die Daten der gleichartigen Sensoren miteinander verglichen und auf Plausibilität überprüft. Mittels der DMS-Sensoren kann in der vorstehend beschriebenen Art und Weise einerseits die Spanngüte eines festgespannten Werkstückträgers ermittelt werden. Grundsätzlich ist es so, dass immer sicherheitsrelevante Messwerte miteinander verglichen werden.

Andererseits kann mittels der weiteren Sensoren B1, B2, B3, B4 die Anwesenheit und die genaue Lage des Werkstückträgers ermittelt werden. Die im Bereich der Oberseite des jeweiligen Spanfutters 6, 7, 8, 9 angeordneten Induktiv-Sensoren B1, B2, B3, B4 können den genauen Abstand des Werkstückträgers zu dem jeweiligen Sensor messen. Auf diese Weise kann insbesondere erkannt werden, ob der Werkstückträger plan auf der Spannvorrichtung 3 bzw. der Z-Auflage des jeweiligen Spannfutters 6, 7, 8, 9 aufliegt und nicht beispielsweise durch Verschmutzung ein unerwünschter und die Bearbeitungsgenauigkeit eines auf dem Werkstückträgers aufgespannten Werkstücks beeinträchtigender Abstand zwischen der Z-Auflage und der entsprechenden Auflage des Werkstückträgers besteht. So kann beispielsweise erkannt werden, ob ein Span unter der Palette eingeklemmt ist und die Palette an der betreffenden Stelle dadurch beispielsweise um 0,1 mm nicht aufliegt. Sofern ein nicht korrektes Aufliegen des Werkstückträgers erkannt wird, wird eine Fehlermeldung ausgegeben und das Freigabesignal nimmt den Wert 0 an.

Jeweils ein weiterer Sensor C1, C2, C3, C4 dient dem Überwachen der Position eines der Betätigung von Spannorganen dienenden Betätigungskolbens. Aufgrund der Position des Betätigungskolbens lässt sich eine Aussage im Hinblick darauf machen, ob sich der Betätigungskolben in der Offenstellung oder Verrieglungsstellung befindet. Diese Information kann im Hinblick darauf genutzt werden, ob ein Spannzapfen in das jeweilige Spannfutter eingeführt bzw. daraus entfernt werden kann. Dadurch kann natürlich auch entschieden werden, ob mittels des Roboters ein Werkstückträger zugeführt bzw. entnommen werden kann. Das Zuführen bzw. Entnehmen eines Werkstückträgers darf jedenfalls nur dann erfolgen, wenn sich der Betätigungskolben in einer Offenstellung befindet.

Schliesslich kann mittels des Beschleunigungssensors 18 die Lage der Spannvorrichtung 3 bestimmt werden. Zusätzlich können mit dem Beschleunigungssensor 18 auch Vibrationen der Spannvorrichtung 3 überwacht werden.

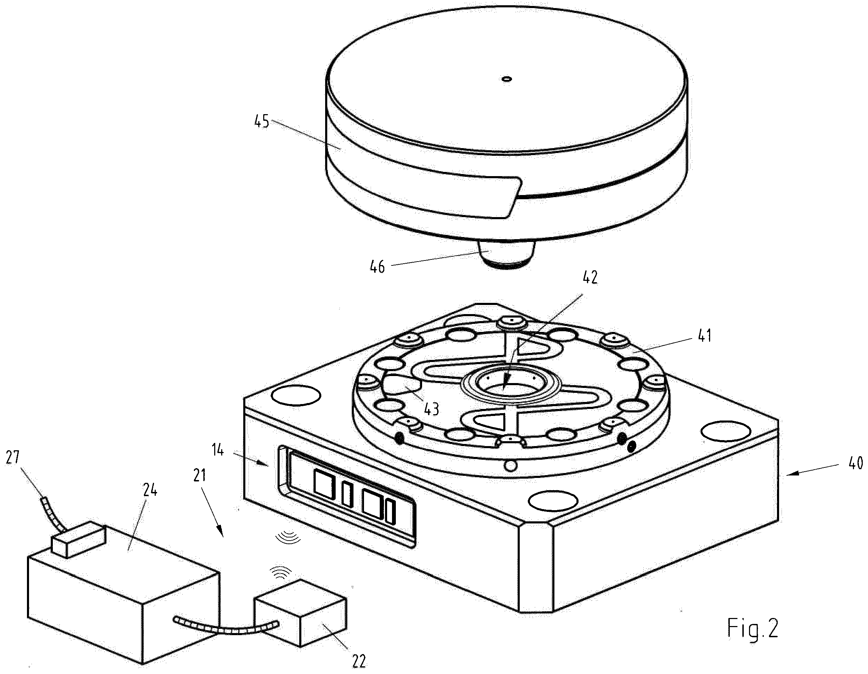

Die Fig. 2 zeigt eine weitere Ausbildung einer Spannvorrichtung 40 zusammen mit einem Werkstückträger 45 und einzelnen Komponenten der Überwachungseinrichtung in perspektivischer Ansicht. Die Spannvorrichtung ist hier als Einfach-Spannfutter 41 ausgebildet. Dieses Spannfutter 41 ist mit einer zentralen Aufnahmeöffnung 42 zur Aufnahme eines an dem Werkstückträger 45 angeordneten Spannzapfens 46 versehen. In diesem Beispiel umfasst die Überwachungseinrichtung neben der an der Spannvorrichtung 40 angeordneten Sendeeinrichtung 14 und der entfernt davon angeordneten Empfangseinrichtung 21 zwei Sensoren zur Bestimmung der Spannkraft, einen dritten Sensor 43 zur Bestimmung der Lage des Werkstückträgers 45, einen vierten Sensor zum Überwachen des der Betätigung von Spannorganen dienenden Betätigungskolbens und einen fünften Sensor zur Bestimmung der Lage der Spannvorrichtung 40, wobei ausser dem dritten Sensor 43 keiner der Sensoren aus der Darstellung gemäss Fig. 2 ersichtlich ist.

Die beiden ersten der Bestimmung der Spannkraft dienenden Sensoren sind als DMS-Sensoren ausgebildet, mittels welchen materialelastische Verformungen des Spannfutters 41 gemessen werden können. Der dritte Sensor 43 ist ein auf der Oberseite des Spannfutters 41 angeordneten Induktivsensor, mittels welchem die Anwesenheit bzw. das korrekte Aufliegen des Werkstückträgers 45 ermittelt werden kann. Der vierte Sensor ist ein im Innern des Spannfutters angeordneter Induktivsensor, welcher die Position des der Betätigung von Spannorganen dienenden Betätigungskolbens erkennt, namentlich ob sich der Betätigungskolben in der Offenstellung oder der Verriegelungsstellung befindet. Schliesslich ist der fünfte Sensor ein an der Spannvorrichtung 40 angeordneter Beschleunigungssensor, mittels welchem die Lage und ggf. Bewegungen des Spannfutters 41 erkannt werden können.

Die Sendeeinrichtung 14 wie auch die Empfangseinrichtung 21 sind grundsätzlich gleich aufgebaut wie diejenige der Fig. 1, wobei aus dieser Darstellung ersichtlich ist, dass das Gateway 24 mit einem mehradrigen Kabel 27 versehen ist, über welches das Freigabesignal redundant an die nicht dargestellte Maschinensteuerung weitergegeben werden kann. Neben dem mehradrigen Kabel 27 zur redundanten Übermittlung des Freigabesignals sind vorzugsweise noch weitere Leitungen zwischen dem Gateway 24 und der Maschinensteuerung vorgesehen, beispielsweise um zusätzliche Informationen wie Futter offen, keine Palette vorhanden, Palette aufgelegt, Palette gespannt, Palette mit 10kN gespannt an die Maschinensteuerung zu übermitteln.

Ein Unterschied der Überwachungseinrichtung gemäss Fig. 2 gegenüber derjenigen in Fig. 1 besteht darin, dass diese lediglich zwei der Bestimmung der Spannkraft dienende DMS-Sensoren aufweist, welche an dem einzigen Spannfutter 41 angeordnet sind. Die beiden DMS-Sensoren sind derart am Spannfutter 41 angeordnet, dass sie positiv miteinander korrelierende Messwerte erfassen. Dazu sind die beiden DMS-Sensoren im Bereich der Oberseite des Spannfutters 41 derart angebracht, dass sie beim Festspannen des Werkstückträgers 45 elastische Verformungen des Materials, namentlich materialelastische Verformungen des Spannfutters 41, wiederholt genau erfassen können. Auf diese Weise kann mit den beiden DMS-Sensoren zuverlässig und sicher ein korrektes Festspannen des Werkstückträgers 45 an der Spannvorrichtung 40 überwacht werden.

Um das sichere Festspannen des Werkstückträgers 45 an dem Spannfutter 41 zu überwachen, genügen grundsätzlich die beiden genannten DMS-Sensoren, da nur dann eine vorbestimmt grosse elastische Verformung des Spannfutters 41 auftritt, wenn eine ausreichend grosse Spannkraft auf den Spannzapfen 46 einwirkt. Sofern jedenfalls eine vorbestimmbar grosse Spannkraft auf den Spannzapfen 46 einwirkt, kann zuverlässig davon ausgegangen werden, dass der Werkstückträger 45 sicher festgespannt ist. Wird der Werkstückträger 45 nicht oder nicht korrekt festgespannt, so kann dies mittels der beiden DMS-Sensoren erkannt werden, da bei einem nicht korrekten Festspannen des Werkstückträgers 45 die elastische Verformung des Spannfutters 41 kleiner ist, als bei einem korrekten Festspannen. Die ein korrektes Festspannen signalisierenden Messwerte können durch Testmessungen und Kalibrierung des Systems ermittelt und abgespeichert werden. Vorzugsweise werden die Messwerte der DMS-Sensoren bereits in der Sendeeinrichtung 14 durch einen Quervergleich auf deren Plausibilität überprüft. Sofern die gemessenen Werte plausibel erscheinen, werden diese mittels der Sendeeinrichtung 14 an die Empfangseinrichtung 21 übermittelt. Andernfalls, d.h. wenn die Messwerte nicht plausibel erscheinen, wird eine Fehlermeldung übermittelt. Ggf. können zusätzlich zu der Fehlermeldung auch noch die Messwerte übermittelt werden. Die Fehlermeldung wird mittels der Empfangseinrichtung 21 empfangen und dementsprechend steht an beiden Ausgängen des Gateways 24 ein Signal mit dem Wert 0 an, was von der Maschinensteuerung erkannt wird. Wenn das Freigabesignal den Wert 0 annimmt, wird ein allfällig laufender Bearbeitungsvorgang unterbrochen, oder kann gar nicht erst nicht gestartet werden.

Sofern die Messwerte plausibel erscheinen, werden diese mittels der Sendeeinrichtung 14 an die Empfangseinrichtung 21 übermittelt und dort mittels den beiden Mikroprozessoreinheiten 25, 26 ausgewertet. Dabei werden die anstehenden Messwerte mit einem Vorgabewert -Sollwert- verglichen. Sofern beide Mikroprozessoreinheiten 25, 26 erkennen, dass der Sollwert erreicht wird, wird auf korrektes Festspannen erkannt und das Freigabesignal nimmt den Wert 1 an. Dieses Freigabesignal wird redundant an die Maschinensteuerung übermittelt, vorzugsweise über separate Leitungen. Wenn dass Freigabesignal den Wert 1 annimmt, kann ein Bearbeitungsvorgang gestartet bzw. weitergeführt werden.

Sofern hingegen zumindest eine der beiden Mikroprozessoreinheiten der Empfangseinrichtung 21 erkennt, dass der Sollwert nicht erreicht wird, wird auf nicht korrektes Festspannen erkannt und das Freigabesignal nimmt den Wert 0 an, was von der Maschinensteuerung wiederum erkannt wird. Auch in diesem Fall wird das Freigabesignal redundant an die Maschinensteuerung übermittelt. Sobald das Freigabesignal den Wert 0 annimmt, wird ein allfällig laufender Bearbeitungsvorgang unterbrochen bzw. kann gar nicht erst gestartet werden.

Somit kann zusammenfassend festgehalten werden, dass nur dann ein korrektes Festspannen erkannt wird, wenn die Messwerte sowohl plausibel sind wie auch einen Sollwert erreichen. Jedenfalls nimmt das Freigabesignal nur dann den Wert 1 an, wenn an den beiden Sensoren korrespondierend hohe bzw. vorbestimmte Messwerte anstehen, die höchstens um einen vorbestimmten Wert voneinander abweichen. Unabhängig von der physischen Ausbildung der Leitungen/Kabel ist es wichtig, dass das Freigabesignal redundant übermittelt wird.

Neben einem korrekten Festspannen des Werkstückträgers 45 können mittels der weiteren Sensoren weitere Zustände der Spanneinrichtung 40 bzw. des Spannfutters 41 festgestellt werden. Mittels des dritten Sensors 43 kann einerseits erkannt werden, ob ein Werkstückträger 45 auf das Spannfutter 41 aufgesetzt ist. Zudem kann über die Grösse des Messsignals des dritten Sensors 43 die Lage des Werkstückträgers 45 in Bezug auf das Spannfutter 41 ermittelt werden, wie bereits vorgängig erläutert wurde. Mittels des vierten Sensors kann die Position eines der Betätigung von Spannorganen -Spannkugelndienenden Betätigungskolbens festgestellt werden. Insbesondere kann ermittelt werden, ob sich der Betätigungskolben in der Ausgangs- oder Verriegelungsstellung befindet. In der Verriegelungsstellung sind die Spannorgane radial nach innen geschoben, so dass sich diese kraftschlüssig an dem Spannzapfen anlegen bzw. anlegen können. Ist der Betätigungskolben in die Ausgangsstellung verschoben, so befinden sich die Spannorgane in der Offenstellung oder sie können zumindest in die Offenstellung zurückgeschoben werden. In der Ausgangsstellung kann daher der Spannzapfen 46 des Werkstückträgers 45 in die Aufnahmeöffnung 42 des Spannfutters 41 eingeführt oder daraus entfernt werden. Das Erkennen der jeweiligen Stellung des Betätigungskolbens ist insbesondere im Zusammenhang mit der automatischen Bestückung der Spannvorrichtung 40 mittels eines Handlingroboters wichtig, indem daraus abgeleitet werden kann, ob der Werkstückträger 45 zugeführt oder entnommen werden kann, ohne dass die Spannvorrichtung 40 Schaden nimmt. Schliesslich kann mittels des vierten Sensors, der als Beschleunigungssensor ausgebildet ist, die Lage der Spannvorrichtung 40 bestimmt werden. Ggf. kann mittels des vierten Sensors die Spannvorrichtung 40 während des Bearbeitens eines Werkstücks auch im Hinblick auf anstehende Erschütterungen/Vibrationen überwacht werden.

Die Messdaten der verschiedenen Sensoren können mittels der Sendeeinrichtung 14 in der vorgängig geschilderten Weise redundant an die Empfangseinrichtung 21 übermittelt werden. Es versteht sich, dass keinesfalls fünf Sensoren vorhanden sein müssen, bzw. dass bei Vorhandensein von fünf Sensoren nicht sämtliche Messwerte oder zumindest nicht immer alle Messwerte an die Empfangseinrichtung 21 übermittelt werden müssen. Um ein sicheres Festspannen des Werkstückträgers zu erkennen, genügt es grundsätzlich, die Daten der beiden DMS-Sensoren auszuwerten.

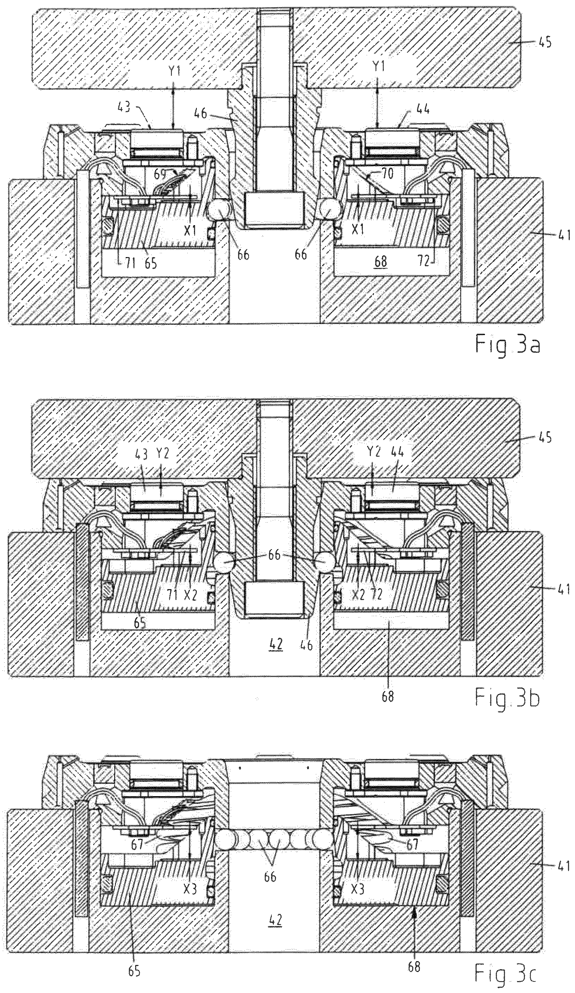

Die Fig. 3a zeigt einen Schnitt durch ein Spannfutter 41 der Spanneinrichtung gemäss Fig. 2 zusammen mit dem abgehoben dargestellten Werkstückträger 45. In dieser Darstellung ist der im Innern des Spannfutters 41 angeordnete Betätigungskolben 65 erkennbar, der dem Betätigen der kugelförmig ausgebildeten Spannorgane 66 dient, mittels welchen der am Werkstückträger 45 befestigte Spannzapfen 46 im Spannfutter 41 festgespannt werden kann. Der in Z-Richtung zwischen der dargestellten Ausgangsstellung und einer Verriegelungsstellung verschiebbare Betätigungskolben 65 ist mittels Druckfedern in Richtung der Verriegelungsstellung, namentlich in Richtung des Spannfutterbodens, belastet.

In diesem Beispiel weist die Überwachungsanordnung neben zwei auf der Oberseite des Spannfutters 41 angeordneten Induktivsensoren 43, 44 und zwei an einem oberen Gehäuseteil des Spannfutters 41 angeordneten DMS-Sensoren 69, 70 zwei im Innern des Spannfutters 41 angeordnete, berührungslos arbeitende Sensoren 71, 72 auf, mittels welchen zumindest zwei Positionen des Betätigungskolbens 65 erfassbar sind. Die beiden Sensoren 71, 72 liegen einander diametral gegenüber und messen den Abstand zu dem Betätigungskolben 65. Vorzugsweise kommen induktiv arbeitende Sensoren 71, 72 zum Einsatz, mittels welchen zumindest zwei, vorzugsweise drei unterschiedliche Positionen des Betätigungskolbens 65 erfassbar sind. Mittels der beiden auf der Oberseite des Spannfutters 41 angeordneten Induktivsensoren 43, 44 kann das Vorhandensein bzw. Aufliegen eines Werkstückträgers 45 erkannt werden, während die beiden DMS-Sensoren 69, 79 elastische Verformungen des Spannfuttergehäuses messen und damit Rückschlüsse auf die tatsächlich anstehende Spannkraft ermöglichen. Die im Innern des Spannfutters 41 angeordneten Sensoren 71, 72 sind ortsfest angebracht und messen den Abstand zu der Oberseite des verschiebbaren Betätigungskolbens 65. Da bei abgehobenem Werkstückträger 45 zwischen der Unterseite des Werkstückträgers 45 und den beiden auf der Oberseite des Spannfutters 41 angeordneten Induktivsensoren 43, 44 ein vergleichsweise grosser Abstand Y1 besteht, erkennen die beiden Induktivsensoren 43, 44, dass kein Werkstückträger 45 aufgesetzt ist.

Um den Betätigungskolben 65 in die in Fig. 3a dargestellte Ausgangsstellung zu verschieben, wird er entgegen der Kraft der Druckfedern pneumatisch nach oben bewegt. Dazu wird ein unterhalb des Betätigungskolbens 65 angeordneter Ringraum 68 mit einem entsprechenden Überdruck beaufschlagt. In dieser Ausgangsstellung liegt der Betätigungskolben 65 an einem oberen, durch den Gehäuseoberteil gebildeten Anschlag an. So dass sich das Spannfutter 41 sich in der Offenstellung befindet, in welcher der Spannzapfen 46 des Werkstückträgers 45 in das Spannfutter 41 eingeführt bzw. daraus entnommen werden kann. In der Ausgangsstellung/Offenstellung des Betätigungskolbens 65 ist der Abstand X1 zwischen dem Betätigungskolben 65 und dem jeweiligen Sensor 71, 72 am geringsten und kann beispielsweise zwischen ca. 0,5 und einigen wenigen Millimetern liegen. In diesem Zustand wird der an dem jeweiligen Sensor 71, 72 anstehende Messwert anlässlich einer Kalibrierung erfasst und als "Offenstellung" abgespeichert. An den beiden DMS-Sensoren steht ein Messwert an, der ebenfalls als "Offenstellung" abgespeichert wird. Schliesslich steht an den beiden auf der Oberseite des Spannfutters 41 angeordneten Induktivsensoren 43, 44 ein Messwert an, der als Werkstückträger "nicht aufgelegt" bzw. "nicht vorhanden" abgespeichert wird.

Die Fig. 3b zeigt das Spannfutter 41 gemäss Fig. 3a mit daran festgespanntem Werkstückträger 45 im Schnitt. Der Betätigungskolben 65 befindet sich hier in seiner Verriegelungsstellung, in der er unter der Kraft der Druckfedern nach unten in Richtung des Spannfutterbodens verschoben ist, wobei im Ringraum 68 kein Überdruck vorherrscht. Beim Herunterfahren drückt der Betätigungskolben 65 mit seiner auf der Innenseite angeordneten, sich nach unten leicht konisch erweiternden Druckfläche die Spannkugeln 66 soweit nach innen in die zentrale Öffnung 68 des Spannfutters 41, bis diese an einer Schulter des Spannzapfens 46 zur Anlage kommen. Der Verschiebweg des Betätigungskolbens 65 in Richtung des Spannfutterbodens wird somit durch die an der Druckfläche des Spannzapfens 46 anliegenden Spannkugeln 66 begrenzt. Der Betätigungskolben 65 wird durch Federkraft in der dargestellten Verriegelungsstellung gehalten, während der Spannzapfen 46 mittels Selbsthemmung gehalten ist.

In der in Fig. 3b gezeigten Verriegelungsstellung des Betätigungskolbens 65 ist der Abstand X2 zwischen dem Betätigungskolben 65 und dem jeweiligen Sensor 71, 72 im Vergleich zu der Ausgangsstellung deutlich grösser, beispielsweise um ca. 1 bis 4 Millimeter. In diesem Zustand wird der an dem jeweiligen Sensor 71, 72 anstehende Messwert anlässlich einer Kalibrierung wiederum erfasst und als "korrekt gespannt" abgespeichert. Bei festgespanntem Werkstückträger 45 wird durch die von den Spannkugeln 66 auf den Spannzapfen 46 einwirkende Spannkraft eine elastische Verformung des Spannfuttergehäuses bewirkt, welche mittels der beiden DMS-Sensoren wiederholbar genau gemessen werden kann. Schliesslich steht an den beiden auf der Oberseite des Spannfutters 41 angeordneten Induktivsensoren 43 44 ein Messwert an, der als Werkstückträger "vorhanden" oder "aufgesetzt" abgespeichert wird, da zwischen der Unterseite des Werkstückträgers 45 und den beiden auf der Oberseite des Spannfutters 41 angeordneten Induktivsensoren 43, 44 ein vergleichsweise geringer Abstand Y2 besteht.

Die Fig. 3c zeigt wiederum einen Schnitt durch das Spannfutter 41 gemäss Fig. 3a ohne Werkstückträger. Da kein Spannzapfen in der zentralen Öffnung 68 des Spannfutters 41 aufgenommen ist, können die Spannkugeln 66 durch den Betätigungskolben 65 nach innen in die zentrale Öffnung 42 des Spannfutters 41 geschoben werden, so dass der Betätigungskolben 65 unter der Wirkung der Druckfedern 67 ganz nach unten in seine Endstellung bewegt werden kann. Voraussetzung dazu ist, dass der Raum 68 unterhalb des Betätigungskolbens 65 pneumatisch nicht mit einem vorgegebenen Überdruck beaufschlagt ist. In diesem Zustand besteht ein vergleichsweise grosser Abstand X3 zwischen dem Betätigungskolben 65 und dem jeweiligen Sensor 71, 72, der im Vergleich zu der Verriegelungsstellung beispielsweise um ca. 1 bis 4 Millimeter grösser ist. In diesem Zustand wird der an dem jeweiligen Sensor 71, 72 anstehende Messwert anlässlich der Kalibrierung wiederum erfasst und als "nicht korrekt gespannt" bzw. "kein Werkstückträger vorhanden" abgespeichert.

Den drei geschilderten Spanfutter-Zuständen können die von den Sensoren 71, 72 gemessenen Werte derart zugeordnet werden, dass ein wiederholt zuverlässiges Erkennen des jeweiligen Zustands des Spannfutters ermöglicht wird. Vorzugsweise werden die beiden Sensoren 71, 72 dazu in den drei bewusst und exakt herbeigeführten Zuständen des Spannfutters 41 kalibriert/geeicht. In dem jeweiligen Zustand des Spannfutters 41 müssen beide Sensoren 71, 72 zumindest annähernd gleiche Werte bzw. Eichwerte messen, damit eine eindeutige Zuordnung des Zustands des Spannfutters vorgenommen werden kann. Die Messdaten der beiden Sensoren werden vorzugsweise in der zuvor geschilderten Weise mittels den beiden Mikroprozessoreinheiten unabhängig voneinander verarbeitet und durch Quervergleich der Messdaten auf deren Plausibilität überprüft, so dass eine eindeutige Zuordnung des Spannfutterzustands vorgenommen werden kann.

Ggf. müssen die an den beiden Sensoren 71, 72 anstehenden Messwerte auch nicht identisch sein, beispielsweise dann, wenn die beiden Sensoren 71, 72 an unterschiedlichen Stellen des Betätigungskolbens 65 messen, sondern die Messwerte müssen den im Eichzustand gemessenen Werten entsprechen. Allenfalls könnten die Sensoren 71, 72 auch in unterschiedlichen Abständen zu dem Betätigungskolben 65 angeordnet werden. Wichtig ist einzig und alleine, dass zumindest zwei Betriebszuständen, vorzugsweise drei Betriebszuständen des Spannfutters 41 von beiden Sensoren 71, 72 eindeutige Werte zugeordnet werden können und die Betriebszustände eindeutig unterschieden werden können. Die drei Betriebszustände, zwischen denen unterschieden werden soll sind insbesondere folgende:
- Spannfutter offen,
- Spannfutter geschlossen und Werkstückträger korrekt festgespannt,
- Spannfutter geschlossen, kein Werkstückträger bzw. kein Spannzapfen vorhanden.

Allerdings ist dem jeweiligen Betriebszustand nicht ein fester einzelner Wert zugeordnet, sondern ein vorgegebenes Toleranzfenster.

Es versteht sich, dass sowohl ein Einzel-Spannfutter wie auch eine Spannvorrichtung mit unterschiedlichen Kombinationen der vorgängig erwähnten Sensoren versehen werden kann/können. Im einfachsten Fall müssen lediglich zwei Sensoren vorgesehen werden, deren Messwerte miteinander positiv korrelieren. Namentlich kann es genügen zwei DMS-Sensoren zum Ermitteln der elastischen Verformung des Spannfuttergehäuses oder zwei Sensoren zum Überwachen der Position des Betätigungskolbens 65 vorzusehen, damit ein eindeutiger Rückschluss über den Spannzustand/Betriebszustand des Spanfutters möglich ist. Natürlich sind auch Kombination der vorgängig genannten Sensoren möglich, wobei zusätzlich auch noch die auf der Oberseite des Spannfutters angeordneten Induktivsensoren, welche Aufschluss über die Lage des Werkstückträgers geben, vorgesehen werden können.

Im Betrieb des Spannfutters wird jedenfalls erst dann ein Freigabesignal für "Spannfutter offen" oder "Spannfutter geschlossen und Werkstückträger korrekt festgespannt" erzeugt, wenn der Messwert beider Sensoren innerhalb eines vorgegebenen Fensters liegt.

Die zwei Sensoren zum Überwachen der Position des Betätigungskolbens können anstelle der eingangs beschriebenen DMS-Sensoren vorgesehen werden, um einen sicheren Betrieb des Spannfutters zu überwachen. Ggf. ist aber auch eine Kombination aus zwei DMS- und den beiden der Überwachung der Position des Betätigungskolbens dienenden Sensoren möglich. Ggf. können auch noch die beiden auf der Oberseite des Spannfutters angeordneten Induktivsensoren dazu kombiniert werden.

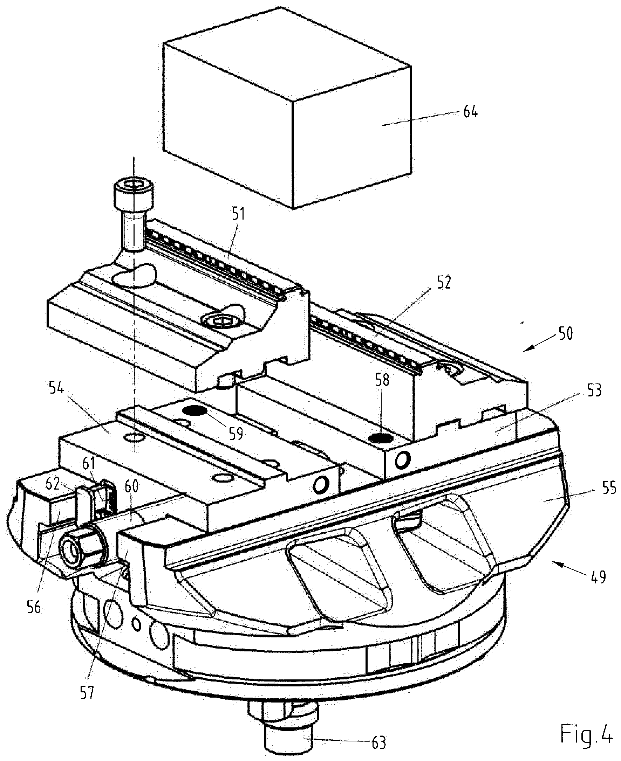

Die Fig. 4 zeigt eine weitere Spannvorrichtung 49 in perspektivischer Darstellung. Die Spannvorrichtung bildet zusammen mit der nicht dargestellten Überwachungsanordnung wiederum ein Spannsystem. Die Spannvorrichtung 49 ist hier ein an sich bekannter Schraubstock 50, der mit zwei verschiebbaren Spannbacken 51, 52 versehen ist, wobei eine Spannbacke 51 in der vorliegenden Darstellung abgehoben ist. Die beiden Spannbacken 51, 52 werden mittels einer Spindel 60 betätigt. Zwischen den beiden Spannbacken 51, 52 kann ein schematisch dargestelltes Werkstück 64 festgespannt werden. Die beiden Spannbacken 51, 52 sind mittels Schrauben auf je einem Führungsschlitten 53, 54 fixierbar. Um ein Werkstück im Schraubstock 50 zu fixieren, wird dieses zwischen den beiden Spannbacken 51, 52 festgespannt. Der Schraubstock 50 besitzt einen stabilen Grundkörper 55, der nach oben hin mit zwei parallel verlaufenden Führungsschienen 56, 57 zur Führung der beiden verschiebbaren Führungsschlitten 53, 54 versehen ist. Der Schraubstock 50 seinerseits ist mit einem auf der Unterseite des Grundkörpers 55 befestigten Spannzapfen 63 versehen, mittels welchem er auf einem Spannfutter befestigt werden kann, wie es in der Fig. 2 dargestellt ist. Es versteht sich, dass der Schraubstock 50 auch auf eine andere Art an einer Bearbeitungsmaschine befestigt werden kann.

Die Spannvorrichtung 49 ist mit einer Sendeeinrichtung (nicht dargestellt) versehen, wie sie vorgängig bereits erläutert wurde. Um die Spanngüte eines zwischen den Spannbacken 51, 52 eingespannten Werkstücks zu überwachen, ist an beiden Führungsschienen 56, 57 je ein DMS angeordnet, wobei aus dieser Darstellung nur ein DMS 61 ersichtlich ist. Um den DMS vor äusseren Einwirkungen zu schützen, ist eine Abdeckkappe 62 vorgesehen. Der jeweilige DMS ist an einer Stelle auf der Führungsschiene 56, 57 platziert, an der beim Festspannen eines Werkstücks hohe Kräfte und dementsprechend hohe elastische Material-Verformungen auftreten, die mittels den DMS-Sensoren gemessen werden können. Indem die DMS-Sensoren an den Führungsschienen 56, 57 angeordnet sind, kann mit diesen Sensoren unabhängig von den eingesetzten Spannbacken die Spannkraft gemessen werden, so dass die Spannbacken 51, 52 getauscht werden können, ohne dass an den DMS-Sensoren etwas geändert werden muss.

Der jeweilige Führungsschlitten 53, 54 ist zudem mit je einem Sensor 58, 59 zur Lageerkennung eines eingespannten Werkstücks versehen. Der jeweilige Sensor 58, 59 ist im äusseren Bereich eines Führungsschlittens 53, 54 derart angeordnet, dass er unter einem rechten Winkel zur Verschieberichtung der Spannbacken 51, 52 nach oben, d.h. in Z-Richtung, misst, so dass der Abstand zwischen der Unterseite eines eingespannten Werkstücks und dem jeweiligen Führungsschlitten 53, 54 erfasst werden kann. Die beiden Sensoren 58, 59 liegen einander diagonal gegenüber. Vorzugsweise sind die Sensoren 58. 59 zur Lageerkennung induktiv arbeitende Sensoren in der Form von induktiven Näherungsschaltern. Auf diese Weise sollen beispielsweise schräg eingespannte Werkstücke erkannt werden können. Indem die Lageerkennungssensoren 58, 59 an den Führungsschlitten 53, 54 angeordnet sind, kann mit diesen Sensoren unabhängig von den eingesetzten Spannbacken gemessen werden.

Die genannten vier Sensoren bilden neben der Sendeeinrichtung und der Empfangseinrichtung wiederum einen Teil der Überwachungseinrichtung. Die Sendeeinrichtung wird vorzugsweise in einer im Bereich der unteren Hälfte des Schraubstocks angeordneten Aussparung aufgenommen. Die Sendeeinrichtung wie auch die Empfangseinrichtung sind grundsätzlich gleich aufgebaut wie diejenige der Fig. 1, so dass an dieser Stelle wiederum nicht näher darauf eingegangen wird. Da die beiden Lageerkennungssensoren 58, 59 an einem beweglichen Teil -Führungsschlitten- des Schraubstocks 50 angeordnet sind, sind diese über bewegliche Kabel mit der in dem Grundkörper 55 aufgenommen Sendeeinrichtung verbunden. Die beiden DMS-Sensoren sind über herkömmliche Kabel mit der Sendeeinrichtung verbunden. Durch einen Quervergleich der an den beiden DMS-Sensoren anstehenden Messdaten können diese wiederum gegenseitig auf Plausibilität überprüft werden. Mittels der beiden DMS-Sensoren kann somit die Spanngüte eines eingespannten Werkstücks in der bereits zuvor geschilderten Weise redundant überwacht werden. Neben den genannten vier Sensoren könnten noch weitere Sensoren wie beispielsweise ein an dem Schraubstock angeordneter Beschleunigungssensor vorgesehen werden, mittels welchem die Lage und ggf. Bewegungen des Schraubstocks erkannt werden können. Zusätzlich könnte beispielsweise auch noch ein Sensor zum Messen des Abstands zwischen den beiden Führungsschlitten 53, 54 vorgesehen werden.

Es versteht sich, dass die vorgängigen Ausführungsbeispiele nicht als abschliessend oder umfassend zu betrachten ist. So könnten beispielsweise sowohl die Sendeeinrichtung wie auch die Empfangseinrichtung mit zwei unabhängigen Sendern bzw. Empfängern zum redundanten Übertragen der Messwerte versehen werden. Zur Überwachung weiterer Parameter können auch noch zusätzliche Sensoren am Spannfutter oder der jeweiligen Spannvorrichtung vorgesehen werden. Beispielsweise könnte noch ein Temperatursensor zum Einsatz kommen. Die Daten der weiteren Sensoren könnten ebenfalls mittels der Sendeeinrichtung drahtlos übertragen werden. Anstelle von auf induktiver Basis arbeitenden Sensoren 71, 72 könnten beispielsweise auch Ultraschallsensoren, kapazitive- oder optische Sensoren zum Ermitteln der Position des Betätigungskolbens vorgesehen werden.

Andererseits sind durchaus auch "einfachere" Varianten einer erfindungsgemäss ausgebildeten Überwachungseinrichtung denkbar, bei denen beispielsweise nur die Spannkraft mittels zwei Sensoren redundant überwacht wird, wobei die Spannkraft nicht zwingend absolut und mit hoher Auflösung erfasst werden muss, sondern ggf. kann es genügen, die Spannkraft in Stufen, beispielsweise in zwei bis zu zehn Stufen, zu erfassen und/oder zu überwachen und mittels der Sendeeinrichtung zu übermitteln. Auch ein bidirektionaler Datenaustausch zwischen der Sendeeinrichtung und der Empfangseinrichtung ist möglich. So können beispielsweise Software-Updates von der Empfangseinrichtung an die Sendeeinrichtung übertragen werden.

Unter dem Begriff Spanngüte wird im vorliegenden Zusammenhang das Verhältnis zwischen der erforderlichen Spannkraft (Abhängig von der Bauteilgrösse und den auf das Werkstück während dessen Bearbeitung einwirkenden Bearbeitungskräften) und der tatsächlich gemessenen Spannkraft bzw. des anstehenden Messwerts verstanden.

Einige Vorteile der erfindungsgemäss gestalteten Überwachungseinrichtung sind nachfolgend kurz zusammengefasst:
- Die Spanngüte zwischen einem Werkstückträger / Werkstück und einer Spanneinrichtung lässt sich zuverlässig überwachen und drahtlos an eine entfernte Stelle übermitteln;
- Die übermittelten Daten können erfasst, abgespeichert und extern ausgewertet werden;
- Mit nur zwei Sensoren lässt sich die Spanngüte eines eingespannten Werkstückträgers oder eines eingespannten Werkstücks zuverlässig und sicher überwachen;
- Die Parameter können kontinuierlich überwacht werden;
- Das Messen bestimmter Parameter erhöht die Prozesssicherheit, wobei insbesondere das kontinuierliche Überwachen der Spannkraft bzw. der Einzugskraft des Spannzapfens aussagekräftige und sicherheitsrelevante Daten liefert;
- Durch das Vorsehen von zwei unterschiedlichen Mikroprozessoren in der Sende- und der Empfangseinrichtung kann eine unabhängige und redundante Aufbereitung der Messdaten sichergestellt werden;
- Die gesamte Messkette inkl. der Übertragung und Auswertung der Messdaten ist sicher und redundant aufgebaut.

**Bezugszeichenliste**

| | | | |
|---|---|---|---|
| 1. | Maschinenraum | 36. | drittes Sensormodul |
| 2. | Spannsystem | 37. | viertes Sensormodul |
| 3. | Spannvorrichtung | 38. | |
| 4. | | 39. | |
| 5. | Basisplatte | 40. | Spannvorrichtung |
| 6. | erstes Spannfutter | 41. | Spannfutter |
| 7. | zweites Spannfutter | 42. | zentrale Öffnung |
| 8. | drittes Spannfutter | 43. | Sensor Anwesenheit Palette |
| 9. | viertes Spannfutter | 44. | |
| 10. | | 45. | Werkstückträger (Palette) |
| 11. | | 46. | Spannzapfen |
| 12. | Überwachungsanordnung | 47. | |
| 13. | | 48. | |
| 14. | Sendeeinrichtung | 49. | Spannvorrichtung |
| 15. | erste Mikroprozessoreinheit | 50. | Schraubstock |
| 16. | zweite Mikroprozessoreinheit | 51. | Spannbacke |
| 17. | Sendeantenne | 52. | Spannbacke |
| 18. | Beschleunigungssensor | 53. | Führungsschlitten |
| 19. | Speisung | 54. | Führungsschlitten |
| 20. | | 55. | Grundkörper |
| 21. | Empfangseinrichtung | 56. | Führungsschiene |
| 22. | Empfangsantenne | 57. | Führungsschiene |
| 23. | erstes Kabel | 58. | erster Lagesensor |
| 24. | Gateway | 59. | zweiter Lagesensor |
| 25. | erste Mikroprozessoreinheit | 60. | Spindel |
| 26. | zweite Mikroprozessoreinheit | 61. | DMS |
| 27. | zweites Kabel | 62. | Abdeckung |
| 28. | Maschinensteuerung | 63. | Spannzapfen |
| 29. | drittes Kabel | 64. | Werkstück |
| 30. | Handlingroboter | 65. | Betätigungskolben |
| 31. | viertes Kabel | 66. | Spannkugeln |
| 32. | Service Tool | 67. | Druckfedern |
| 33. | | 68. | Ringraum |
| 34. | erstes Sensormodul | 69. | Erster DMS-Sensor |
| 35. | zweites Sensormodul | 70. | Zweiter DMS-Sensor |
| 71. | Erster Induktivsensor (Betätigungskolben) | | |
| 72. | Zweiter Induktivsensor (Betätigungskolben) | | |
| L1-L4 | Leitungen (Sensormodule) | | |
| A1-C4 | Sensoren | | |

## Patentansprüche

1. Überwachungsanordnung welche zum Überwachen der Spanngüte eines in einer Spannvorrichtung (3, 40, 49) eingespannten Werkstückträgers oder Werkstücks eingerichtet ist, mit zumindest einem an der Spannvorrichtung (3, 40, 49) anzuordnenden Sensor (A1-C4) und einer Sendeeinrichtung (14) zur drahtlosen Übertragung von mittels des Sensors (A1-C4) ermittelten Parametern an eine Empfangseinrichtung (21), wobei die Überwachungsanordnung (12) zumindest zwei Sensoren (A1-A4) zum unabhängigen Erfassen der Spanngüte als Verhältnis zwischen der erforderlichen und der tatsächlich gemessenene Spannkraft eines eingespannten Werkstückträgers oder Werkstücks umfasst, und dass die Sendeeinrichtung (14) derart ausgebildet ist, dass sie den oder die ermittelten oder berechneten Parameter redundant an die Empfangseinrichtung (21) übermittelt.

2. Überwachungsanordnung nach Anspruch 1, **dadurch gekennzeichnet, dass** die Überwachungsanordnung (12) zumindest ein Sensormodul (34, 35, 36, 37) aufweist, mittels welchem/welchen die an den Sensoren (A1-C4) anstehenden Messwerte digitalisiert und an die Sendeeinrichtung (14) übermittelt werden.

3. Überwachungsanordnung nach Anspruch 2, **dadurch gekennzeichnet, dass** die Sendeeinrichtung (14) mit zwei unabhängigen Mikroprozessoreinheiten (15, 16) versehen ist, die konfiguriert sind, um die von dem jeweiligen Sensormodul (34, 35, 36, 37) übermittelten Messwerte jeweils unabhängig und redundant aufzubereiten.

4. Überwachungsanordnung nach Anspruch 3, **dadurch gekennzeichnet, dass** die Sendeeinrichtung (14) zumindest eine Sendeantenne (17) zur Übermittlung der mittels der zwei unabhängigen Mikroprozessoreinheiten (15, 16) aufbereiteten Messdaten umfasst.

5. Überwachungsanordnung nach einem der vorhergehenden Ansprüche, **dadurch gekennzeichnet, dass** zumindest zwei Sensoren (A1-A4) derart angeordnet sind, dass deren Messwerte positiv miteinander korrelieren.

6. Überwachungsanordnung nach einem der vorhergehenden Ansprüche, **dadurch gekennzeichnet, dass** zumindest zwei Sensoren (A1-A4) derart ausgebildet und angeordnet sind, dass beim Festspannen eines Werkstückträgers oder eines Werkstücks materialelastische Verformungen eines Spannfutters (6, 7, 8, 9, 41) oder Schraubstocks (50) der Spannvorrichtung (3, 40, 49) messbar sind, wobei die Sensoren insbesondere Dehnungsmesstreifen-Sensoren (DMS) sind.

7. Überwachungsanordnung nach einem der vorhergehenden Ansprüche, wobei die Spannvorrichtung zumindest ein Spannfutter (41) mit einem in dessen Innerem angeordneten, in Z-Richtung verschiebbaren Betätigungskolben (65) zum Betätigen von Spannorganen (66) zum Festspannen eines Spannzapfens (46) aufweist, **dadurch gekennzeichnet, dass** die Überwachungsanordnung zumindest zwei berührungslos arbeitende Sensoren (71, 72) aufweist, mittels welchen unabhängig voneinander zumindest zwei Positionen des Betätigungskolbens (65) erfassbar sind.

8. Überwachungsanordnung nach Anspruch 7, **dadurch gekennzeichnet, dass** die Sensoren induktiv arbeitende Sensoren (71, 72) sind, mittels welchen zumindest eine Offen- und eine Verriegelungsstellung des Betätigungskolbens (65) erfassbar sind.

9. Überwachungsanordnung nach einem der vorhergehenden Ansprüche, zur Überwachung der Spanngüte eines mittels der Spannvorrichtung (3, 40) festgespannten Werkstückträgers, **dadurch gekennzeichnet, dass** die Überwachungsanordnung zumindest einen weiteren Sensor (B1-B4, 43) umfasst, mittels welchem das Aufliegen des Werkstückträgers auf der Spannvorrichtung (3, 40) erkennbar ist.

10. Überwachungsanordnung nach einem der Ansprüche 1 bis 6, zur Überwachung der Spanngüte eines in einem Schraubstock (50) einer Spannvorrichtung (49) eingespannten Werkstücks, wobei der Schraubstock (50) mit zwei Führungsschlitten (53, 54) versehen ist und wobei auf jedem Führungsschlitten (53, 54) eine Spannbacke (51, 52) zum Festspannen eines Werkstücks befestigt ist, **dadurch gekennzeichnet, dass** die Überwachungsanordnung zumindest zwei weitere Sensoren (58, 59) umfasst, mittels welchen das Aufliegen eines Werkstücks auf dem jeweiligen Führungsschlitten (53, 54) des Schraubstocks (50) erkennbar ist.

11. Überwachungsanordnung nach einem der vorhergehenden Ansprüche, **dadurch gekennzeichnet, dass** die Überwachungsanordnung mit einem weiteren Sensor (C1-C4) versehen ist, mittels welchem die Position eines der Betätigung von Spannorganen dienenden Elements erkennbar ist.

12. Überwachungsanordnung nach einem der vorhergehenden Ansprüche, **dadurch gekennzeichnet, dass** die Überwachungsanordnung eine Empfangsantenne (22) zum Empfangen von mittels der Sendeeinrichtung (14) übermittelten Daten und ein mit der Empfangsantenne (22) verbundenes Gateway (24) aufweist, wobei das Gateway (24) mit zwei unabhängigen Mikroprozessoreinheiten (25, 26) versehen ist, mittels welchen die empfangenen Daten jeweils unabhängig und redundant verarbeitet werden, und wobei das Gateway (24) mit einer Maschinensteuerung (28) einer Bearbeitungsmaschine verbunden ist.

13. Überwachungsanordnung nach Anspruch 12, mit einer Empfangseinrichtung (21) zum Empfangen von mittels der Sendeeinrichtung (14) übermittelten Parametern, **dadurch gekennzeichnet, dass** das Gateway (24) die von der Sendeeinrichtung (14) übermittelten Messwerte derart verarbeitet, dass bei Feststellung einer Übereinstimmung der erfassten Messwerte und Erreichen von vorbestimmten Messwerten der Maschinensteuerung ein Signal für einen korrekt festgespannten Werkstückträger oder ein korrekt festgespanntes Werkstück und/oder für einen sicheren Betrieb einer Bearbeitungsmaschine redundant an die Maschinensteuerung (28) ausgegeben wird.

14. Spannsystem (2) mit einer Spannvorrichtung (3, 40, 49) zum Festspannen eines Werkstückträgers oder eines Werkstücks und einer nach einem der vorhergehenden Ansprüche ausgebildeten Überwachungsanordnung, **dadurch gekennzeichnet, dass** die Überwachungsanordnung (12) mit zumindest zwei an der Spannvorrichtung angeordneten Sensoren (A1-A4) zum unabhängigen Erfassen der auf einen eingespannten Werkstückträger bzw. ein eingespanntes Werkstück einwirkenden Spannkraft versehen ist.

15. Spannsystem (2) nach Anspruch 14, **dadurch gekennzeichnet, dass** die Sendeeinrichtung (14) der Überwachungsanordnung (12) einen an der Spannvorrichtung (3, 40, 49) angeordneten Funksender und die Empfangseinrichtung (21) einen entfernt davon angeordneten Funkempfänger umfasst, wobei die Sendeeinrichtung (14) zwei unabhängige Mikroprozessoreinheiten (15, 16) aufweist, die konfiguriert sind, um die von dem jeweiligen Sensormodul (34, 35, 36, 37) übermittelten Messwerte unabhängig und redundant aufzubereiten und durch Quervergleich der Messdaten auf deren Plausibilität zu überprüfen.

16. Spannsystem (2) nach Anspruch 14 oder 15, **dadurch gekennzeichnet, dass** die Sensoren (A1-A4) Dehnungsmesstreifen-Sensoren sind, welche derart kraft- und/oder stoffschlüssig an einem Spannfutter oder einem Schraubstock der Spannvorrichtung (3, 40, 49) angebracht sind, dass deren Signal im Wesentlichen proportional zur Spannkraft ist.

17. Spannsystem (2) nach einem der Ansprüche 14 bis 16, **dadurch gekennzeichnet, dass** die Spannvorrichtung (3, 40) zumindest ein Spannfutter (6, 7, 8, 9, 41) zum Festspannen eines Werkstückträgers aufweist, und dass das Spannfutter (6, 7, 8, 9, 41) einen im Bereich der Oberseite angeordneten Sensor (B1-B4, 43) zum Erkennen des Aufliegens des Werkstückträgers umfasst.

18. Spannsystem (2) nach einem der Ansprüche 14 bis 17, mit einem Spannfutter (41) zum Festspannen eines mit einem Spannzapfen (46) versehenen Werkstückträgers (45), wobei das Spannfutter (41) mit einem zwischen einer Ausgangs- und einer Verriegelungsstellung verschiebbaren Betätigungskolben zum Betätigen von Spannorganen zum Festspannen des Spannzapfens (46) versehen ist, **dadurch gekennzeichnet, dass** das Spannfutter (41) mit einem weiteren Sensor zum Überwachen der Position des Betätigungskolbens versehen ist, insbesondere dass das Spannfutter (41) mit zumindest zwei berührungslos arbeitenden Sensoren (71, 72) versehen ist, mittels welchen unabhängig voneinander zumindest zwei Positionen des Betätigungskolbens (65) erfassbar sind.

19. Spannsystem (2) nach einem der Ansprüche 14 bis 17, mit zumindest zwei Spannfuttern (6, 7, 8, 9) zum Festspannen eines mit einer zu der Anzahl an Spannfuttern korrespondierenden Anzahl an Spannzapfen versehenen Werkstückträgers, wobei jedes Spannfutter (6, 7, 8, 9) mit einem zwischen einer Ausgangs- und einer Verriegelungsstellung verschiebbaren Betätigungskolben zum Betätigen von Spannorganen zum Festspannen des jeweiligen Spannzapfens versehen ist, **dadurch gekennzeichnet, dass** zumindest ein Spannfutter mit einem weiteren Sensor (C1-C4) zum Überwachen der Position des Betätigungskolbens versehen ist, insbesondere dass zumindest ein Spannfutter (41) mit zumindest zwei berührungslos arbeitenden Sensoren (71, 72) versehen ist, mittels welchen unabhängig voneinander zumindest zwei Positionen des Betätigungskolbens (65) erfassbar sind.

20. Spannsystem (2) nach einem der Ansprüche 14 bis 17, **dadurch gekennzeichnet, dass** die Spannvorrichtung als Schraubstock (50) mit zwei Spannbacken (51, 52) ausgebildet ist, wobei jeder Spannbacke (51, 52) ein Sensor zum Ermitteln der Spannkraft eines eingespannten Werkstücks zugeordnet ist.

21. Verfahren zur Überwachung einer Spannvorrichtung einer Bearbeitungsmaschine mittels einer nach einem der Ansprüche 1 bis 13 ausgebildeten Überwachungsanordnung, **dadurch gekennzeichnet, dass** mittels zumindest zweier unabhängiger Sensoren (A1-A4) die Güte der Spannung eines in der Spannvorrichtung eingespannten Werkstückträgers oder Werkstücks ermittelt wird, dass die mittels des jeweiligen Sensors (A1-A4) ermittelten Messdaten miteinander verglichen und auf Plausibilität überprüft werden, und dass der oder die ermittelten oder berechneten Parameter mittels der Sendeeinrichtung (14) redundant an die Empfangseinrichtung (21) übermittelt wird/werden und von dem Gateway (24) an die Steuerung (28) der Bearbeitungsmaschine übergeben wird.

22. Verfahren nach Anspruch 21, **dadurch gekennzeichnet, dass** eine Überprüfung auf Plausibilität ein Prüfen auf Übereinstimmung der ermittelten und miteinander verglichenen Parameter nach deren Aufbereitung durch die zwei unabhängigen Mikroprozessoreinheiten (15, 16) der Sendeeinrichtung (14) umfasst.

23. Verfahren nach Anspruch 22, **dadurch gekennzeichnet, dass** der oder die ermittelten oder berechneten Parameter mittels der Sendeeinrichtung (14) redundant und in Form von Datenpaketen an die Empfangseinrichtung (21) übermittelt wird/werden und dass empfängerseitig überprüft wird, ob die übermittelten Daten plausibel sind.

24. Verfahren nach Anspruch 23, wobei die Empfangseinrichtung (21) ein Gateway (24) umfasst, **dadurch gekennzeichnet, dass** bei Übereinstimmung der ermittelten und miteinander verglichenen Parameter und Erreichen von vorbestimmten Messwerten mittels des Gateways (24) ein Freigabesignal für sicheres Arbeiten erzeugt und redundant an die Steuerung (28) der Bearbeitungsmaschine übermittelt wird.

25. Verfahren nach Anspruch 24, **dadurch gekennzeichnet, dass** das Gateway (24) das Freigabesignal in der Form eines binären Signals ausgibt, wobei das Freigabesignal den Wert 1 annimmt, wenn die erfassten Messwerte plausibel sind und einen vorbestimmten Wert erreichen, und wobei das Freigabesignal den Wert 0 annimmt, wenn die erfassten Messwerte entweder nicht plausibel sind oder einen vorbestimmten Wert nicht erreichen.

## Claims

1. A monitoring arrangement for monitoring the clamping quality of a workpiece carrier or workpiece clamped in a clamping device (3, 40, 49), with at least one sensor (A1-C4) to be arranged on the clamping device (3, 40, 49) and a transmitting device (14) for the wireless transmission of parameters determined by means of the sensor (A1-C4) to a receiving device (21), wherein the monitoring arrangement (12) comprises at least two sensors (A1-A4) for the independent detection of the clamping quality as a ratio between the required and the actually measured clamping force of a clamped workpiece carrier or workpiece, and that the transmitting device (14) is constituted such that it transmits one or more determined or calculated parameters redundantly to the receiving device (21).

2. The monitoring arrangement according to claim 1, **characterized in that** the monitoring arrangement (12) comprises at least one sensor module (34, 35, 36, 37), by means of which measurement values generated by the sensors (A1-C4) are digitalized and transmitted to the transmitting device (14).

3. The monitoring arrangement according to claim 2, **characterized in that** the transmitting device (14) is provided with two independent microprocessor units (15, 16), which are configured to prepare the measurement values transmitted by the respective sensor module (34, 35, 36, 37) independently and redundantly relative to each other.

4. The monitoring arrangement according to claim 3, **characterized in that** the transmitting device (14) comprises at least one transmitting antenna (17) for the transmission of the measurement values prepared by means of the two independent microprocessor units (15, 16).

5. The monitoring arrangement according to any of the preceding claims, **characterized in that** at least two sensors (A1-A4) are arranged in such a way that their measurement values correlate positively with one another.

6. The monitoring arrangement according to any of the preceding claims, **characterized in that** at least two sensors (A1-A4) are designed and arranged in such a way that material-elastic deformations of a chuck (6, 7, 8, 9, 41) or vice (50) of the clamping device (3, 40, 49) can be measured during the clamping of a workpiece carrier or a workpiece, wherein the sensors are in particular strain gauge sensors (DMS).

7. The monitoring arrangement according to any of the preceding claims, wherein the clamping device comprises at least one chuck (41) with an actuating piston (65) for actuating clamping elements for clamping a clamping spigot (46), the actuating piston being arranged inside the chuck and being displaceable in a Z-direction, **characterized in that** the monitoring arrangement comprises at least two non-contact sensors (71, 72) by means of which at least two positions of the actuating piston (65) are detectable independently from each other.

8. The monitoring arrangement according to claim 7, **characterized in that** the sensors are inductively working sensors (71, 72) which allow for the detection of at least an open and a locked position of the actuating piston (65).

9. The monitoring arrangement according to any of the preceding claims for the monitoring of the clamping quality of a workpiece carrier clamped in the clamping device (3, 40), **characterized in that** the monitoring arrangement comprises at least one further sensor (B1-B4, 43), by means of which the mounting of the workpiece carrier on the clamping device (3, 40) can be detected.

10. The monitoring arrangement according to any of claims 1 to 6, for monitoring the clamping quality of a workpiece clamped in a vice (50) of a clamping device (49), wherein the vice (50) is provided with two guide blocks (53, 54) and wherein a clamping jaw (51, 52) for clamping a workpiece is fastened on each guide block (53, 54), **characterized in that** the monitoring arrangement comprises at least two further sensors (58, 59), by means of which the mounting of a workpiece on the respective guide block (53, 54) of the vice (50) can be detected.

11. The monitoring arrangement according to any of the preceding claims, **characterized in that** the monitoring arrangement is provided with a further sensor (C1-C4), by means of which the position of an element serving to activate clamping elements can be detected.

12. The monitoring arrangement according to any of the preceding claims, **characterized in that** the monitoring arrangement comprises a receiving antenna (22) for receiving data transmitted by means of the transmitting device (14) and a gateway (24) connected to the receiving antenna (22), wherein the gateway (24) is provided with two independent microprocessor units (25, 26), by means of which the received data are independently and redundantly further processed in each case, and wherein the gateway (24) is connected to a machine control (28) of a processing machine.

13. The monitoring arrangement according to claim 12, with a receiving device (21) for receiving parameters transmitted by means of the transmitting device (14), **characterized in that** the gateway (24) processes the measurement values transmitted by the transmitting device (14) in such a way that, when agreement of the detected measurement values is ascertained and predetermined measurement values of the machine control are reached, a signal is outputted redundantly to the machine control (28) for a correctly clamped workpiece carrier or a correctly clamped workpiece and/or for a reliable operation of the machine tool.

14. A clamping system (2) with a clamping device (3, 40, 49) for clamping a workpiece carrier or a workpiece and a monitoring arrangement constituted according to any of the preceding claims, **characterized in that** the monitoring arrangement (12) is provided with at least two sensors (A1-A4) arranged in the clamping device for the independent detection of the clamping force acting on a clamped workpiece carrier or a clamped workpiece.

15. The clamping system (2) according to claim 14, **characterized in that** the transmitting device (14) of the monitoring arrangement (12) comprises a radio transmitter arranged on the clamping device (3, 40, 49) and the receiving device (21) comprises a radio receiver arranged remote from the latter, wherein the transmitting device (14) comprises two independent microprocessor units (15, 16), which are configured in order to prepare the measurement values transmitted by the respective sensor module (34, 35, 36, 37) independently and redundantly and to check their plausibility by cross-comparison of the measurement values.

16. The clamping system (2) according to claim 14 or 15, **characterized in that** the sensors (A1-A4) are strain gauge sensors, which are fitted friction-locked and/or firmly bonded to a chuck or a vice of the clamping device (3, 40, 49) in such a way that their signal is essentially proportional to the clamping force.

17. The clamping system (2) according to any of claims 14 to 16, **characterized in that** the clamping device (3, 40) comprises at least one chuck (6, 7, 8, 9, 41) for clamping a workpiece carrier, and that the chuck (6, 7, 8, 9, 41) comprises a sensor (B1-B4, 43) arranged in the region of the upper side for detecting the mounting of the workpiece carrier.

18. The clamping system (2) according to any of claims 14 to 17, with a chuck (41) for clamping a workpiece carrier (45) provided with a clamping spigot (46), wherein the chuck (41) is provided with an actuating piston displaceable between an initial and a locking position for actuating clamping elements for clamping the clamping spigot (46), **characterized in that** the chuck (41) is provided with a further sensor for monitoring the position of the actuating piston, in particular that the chuck (41) is provided with at least two non-contact sensors (71, 72), by means of which at least two positions of the actuating piston (65) are independently detectable.

19. The clamping system (2) according to any of claims 14 to 17, with at least two chucks (6, 7, 8, 9) for clamping a workpiece carrier provided with a number of clamping spigots corresponding to the number of chucks, wherein each chuck (6, 7, 8, 9) is provided with an actuating piston displaceable between an initial and a locking position for actuating clamping elements for clamping the respective clamping spigot, **characterized in that** at least one chuck is provided with a further sensor (C1-C4) for monitoring the position of the actuating piston, in particular that at least one chuck (41) is provided by at least two non-contact sensors (71, 72), by means of which at least two positions of the actuating piston (65) are independently detectable.

20. The clamping system according to any of claims 14 to 17, **characterized in that** the clamping device is constituted as a vice (50) with two clamping jaws (51, 52), wherein a sensor for determining the clamping force of a clamped workpiece is assigned to each clamping jaw (51, 52).

21. A method for monitoring a clamping device of a processing machine by means of a monitoring arrangement according to any of claims 1 to 13, **characterized in that** the quality of the clamping of a workpiece carrier or workpiece clamped in the clamping device is determined by means of at least two independent sensors (A1-A4), that measurement values determined by means of the respective sensors (A1-A4) are compared with one another and checked for plausibility, and that one or more determined or calculated parameters is transmitted redundantly to a receiving device (21) by means of a transmitting device (14) and is transmitted by the gateway (24) to the control (28) of the processing machine.

22. The method according to claim 21, **characterized in that** checking for plausibility includes checking for agreement of the parameters determined and compared with one another after their preparation by means of the two independent microprocessor units (15, 16) of the transmitting device (14).

23. The method according to claim 22, **characterized in that** the one or more determined or calculated parameter or parameters is transmitted by means of the transmitting device (14) redundantly and in the form of data packets to the receiving device (21) and that a check is made at the receiver side as to whether the transmitted data are plausible.

24. The method according to claim 23, wherein the receiving device (21) comprises a gateway (24), **characterized in that** that, when the parameters determined and compared with one another agree and predetermined measurement values are reached, a release signal for secure working is generated by means of the gateway (24) and transmitted redundantly to the control (28) of the processing machine.

25. The method according to claim 24, **characterized in that** that the gateway (24) emits the release signal in the form of a binary signal, wherein the release signal assumes the value 1 when the detected measurement values are plausible and reach a predetermined value, and wherein the release signal assumes the value 0 when the detected measurement values are either implausible or do not reach a predetermined value.

## Revendications

1. Ensemble de surveillance configuré pour surveiller la qualité de serrage d'un support de pièce ou d'une pièce serré(e) dans un dispositif de serrage (3, 40, 49), comprenant au moins un capteur (A1-C4) destiné à être disposé sur le dispositif de serrage (3, 40, 49) et un moyen d'émission (14) destiné à la transmission sans fil de paramètres déterminés au moyen du capteur (A1-C4) vers un moyen de réception (21), dans lequel
l'ensemble de surveillance (12) comporte au moins deux capteurs (A1-A4) permettant de détecter de façon indépendante la qualité de serrage en tant que rapport entre la force de serrage nécessaire et la force de serrage effectivement mesurée d'un support de pièce ou d'une pièce serré(e), et dans lequel le moyen d'émission (14) est conçu de manière à transmettre de façon redondante le ou les paramètres déterminés ou calculés au moyen de réception (21).

2. Ensemble de surveillance selon la revendication 1, **caractérisé en ce que** l'ensemble de surveillance (12) présente au moins un module de capteur (34, 35, 36, 37), au moyen duquel les valeurs de mesure relevées au niveau des capteurs (A1-C4) sont numérisées et transmises au moyen d'émission (14).

3. Ensemble de surveillance selon la revendication 2, **caractérisé en ce que** le moyen d'émission (14) est doté de deux unités de microprocesseur (15, 16) indépendantes, lesquelles sont configurées pour traiter de façon indépendante et redondante les valeurs de mesure transmises par le module de capteur (34, 35, 36, 37) respectif.

4. Ensemble de surveillance selon la revendication 3, **caractérisé en ce que** le moyen d'émission (14) comporte au moins une antenne d'émission (17) destinée à la transmission des valeurs de mesure traitées au moyen des deux unités de microprocesseur (15, 16) indépendantes.

5. Ensemble de surveillance selon l'une des revendications précédentes, **caractérisé en ce qu'**au moins deux capteurs (A1-C4) sont disposés de telle façon que leurs valeurs de mesure sont corrélées positivement entre elles.

6. Ensemble de surveillance selon l'une des revendications précédentes, **caractérisé en ce qu'**au moins deux capteurs (A1-A4) sont conçus et disposés de telle façon que lors du serrage d'un support de pièce ou d'une pièce, des déformations de matériau élastiques d'un mandrin (6, 7, 8, 9, 41) ou d'un étau (50) du dispositif de serrage (3, 40, 49) peuvent être mesurées, les capteurs étant en particulier des capteurs à jauge de contrainte (DMS).

7. Ensemble de surveillance selon l'une des revendications précédentes, dans lequel le dispositif de serrage présente au moins mandrin (41) comprenant un piston d'actionnement (65) disposé à l'intérieur de celui-ci et déplaçable dans une direction Z pour l'actionnement d'organes de serrage (66) destinés au serrage d'un tenon de serrage (46), **caractérisé en ce que** l'ensemble de surveillance présente au moins deux capteurs sans contact (71, 72) permettant de détecter au moins deux positions du piston d'actionnement (65) indépendamment l'une de l'autre.

8. Ensemble de surveillance selon la revendication 7, **caractérisé en ce que** les capteurs sont des capteurs inductifs (71, 72) permettant de détecter au moins une position d'ouverture et une position de verrouillage du piston d'actionnement (65).

9. Ensemble de surveillance selon l'une des revendications précédentes, destiné à surveiller la qualité de serrage d'un support de pièce serré au moyen du dispositif de serrage (3, 40), **caractérisé en ce que** l'ensemble de surveillance comporte au moins un autre capteur (B1-B4, 43) permettant de reconnaître l'appui du support de pièce sur le dispositif de serrage (3, 40).

10. Ensemble de surveillance selon l'une des revendications 1 à 6, destiné à surveiller la qualité de serrage d'une pièce serrée dans un étau (50) d'un dispositif de serrage (49), dans lequel l'étau (50) est doté de deux glissières de guidage (53, 54) et dans lequel une mâchoire de serrage (51, 52) destinée à serrer une pièce est fixée sur chaque glissières de guidage (53, 54), **caractérisé en ce que** le ensemble de surveillance comporte au moins deux autres capteurs (58, 59) permettant de reconnaître l'appui d'une pièce sur la glissière de guidage (53, 54) respective de l'étau (50).

11. Ensemble de surveillance selon l'une des revendications précédentes, **caractérisé en ce que** l'ensemble de surveillance est doté d'un autre capteur (C1-C4) permettant de reconnaître la position d'un élément servant à l'actionnement d'organes de serrage.

12. Ensemble de surveillance selon l'une des revendications précédentes, **caractérisé en ce que** l'ensemble de surveillance présente une antenne de réception (22) destinée à recevoir des données transmises par le moyen d'émission (14), ainsi qu'une passerelle (24) reliée à l'antenne de réception (22), dans lequel la passerelle (24) est dotée de deux unités de microprocesseur (25, 26) indépendantes, au moyen desquelles les données reçues sont traitées respectivement de façon indépendante et redondante, et dans lequel la passerelle (24) est reliée à une commande de machine (28) d'une machine d'usinage.

13. Ensemble de surveillance selon la revendication 12, comprenant un moyen de réception (21) destiné à recevoir des paramètres transmis par le moyen d'émission (14), **caractérisé en ce que** la passerelle (24) traite de telle façon les valeurs de mesure transmises par le moyen d'émission (14) que lorsqu'une concordance des valeurs de mesure détectées est constatée et que des valeurs de mesure prédéfinies de la commande de machine sont atteintes, un signal indiquant un support de pièce correctement serré ou une pièce correctement serrée et/ou indiquant un fonctionnement sûr d'une machine d'usinage est délivré de façon redondante à la commande de machine (28).

14. Système de serrage (2) comprenant un dispositif de serrage (3, 40, 49) destiné au serrage d'un support de pièce ou d'une pièce et un ensemble de surveillance conçu selon l'une des revendications précédentes, **caractérisé en ce que** l'ensemble de surveillance (12) est doté d'au moins deux capteurs (A1-A4) disposés sur le dispositif de serrage, destinés à détecter de façon indépendante la force de serrage agissant sur un support de pièce serré ou sur une pièce serrée.

15. Système de serrage (2) selon la revendication 14, **caractérisé en ce que** le moyen d'émission (14) de l'ensemble de surveillance (12) comporte un émetteur radio disposé sur le dispositif de serrage (3, 40, 49), et le moyen de réception (21) comporte un récepteur radio disposé à distance de celui-ci, dans lequel le moyen d'émission (14) présente deux unités de microprocesseur (15, 16) indépendantes, lesquelles sont configurées pour traiter de façon indépendante et redondante des valeurs de mesure transmises par le module de capteur (34, 35, 36, 37) respectif et pour vérifier la cohérence de celles-ci par comparaison croisée des données de mesure.

16. Système de serrage (2) selon la revendication 14 ou 15, **caractérisé en ce que** les capteurs (A1-A4) sont des capteurs à jauge de contrainte, lesquels sont fixés par liaison de force et/ou de matière sur un mandrin ou un étau du dispositif de serrage (3, 40, 49), de telle façon que leur signal est essentiellement proportionnel à la force de serrage.

17. Système de serrage (2) selon l'une des revendications 14 à 16, **caractérisé en ce que** le dispositif de serrage (3, 40) présente au moins un mandrin (6, 7, 8, 9, 41) destiné au serrage d'un support de pièce, et **en ce que** le mandrin (6, 7, 8, 9, 41) comporte un capteur (B1-B4, 43) disposé dans la région du côté supérieur, destiné à reconnaître l'appui du support de pièce.

18. Système de serrage (2) selon l'une des revendications 14 à 17, comprenant un mandrin (41) destiné au serrage d'un support de pièce (45) doté d'un tenon de serrage (46), dans lequel le mandrin (41) est doté d'un piston d'actionnement déplaçable entre une position de départ et une position de verrouillage pour actionner des organes de serrage destinés à serrer le tenon de serrage (46), **caractérisé en ce que** le mandrin (41) est doté d'un autre capteur destiné à surveiller la position du piston d'actionnement, en particulier **en ce que** le mandrin (41) est doté d'au moins deux capteurs sans contact (71, 72) permettant de détecter au moins deux positions du piston d'actionnement (65) indépendamment l'une de l'autre.

19. Système de serrage (2) selon l'une des revendications 14 à 17, comprenant au moins deux mandrins (6, 7, 8, 9) destinés au serrage d'un support de pièce doté d'un nombre de tenons de serrage correspondant au nombre de mandrins, dans lequel chaque mandrin (6, 7, 8, 9) est doté d'un piston d'actionnement déplaçable entre une position de départ et une position de verrouillage pour actionner des organes de serrage destinés à serrer le tenon de serrage respectif, **caractérisé en ce qu'**au moins un mandrin est doté d'un autre capteur (C1-C4) destiné à surveiller la position du piston d'actionnement, en particulier **en ce qu'**un mandrin (41) est doté d'au moins deux capteurs sans contact (71, 72) permettant de détecter au moins deux positions du piston d'actionnement (65) indépendamment l'une de l'autre.

20. Système de serrage (2) selon l'une des revendications 14 à 17, **caractérisé en ce que** le dispositif de serrage est conçu comme un étau (50) doté de deux mâchoires de serrage (51, 52), dans lequel un capteur destiné à déterminer la force de serrage d'une pièce serrée est attribué à chaque mâchoire de serrage (51, 52).

21. Procédé de surveillance d'un dispositif de serrage d'une machine d'usinage au moyen d'un ensemble de surveillance selon l'une des revendications 1 à 13, **caractérisé en ce que** la qualité de serrage d'un support de pièce ou d'une pièce serré(e) dans le dispositif de serrage est déterminée au moyen d'au moins deux capteurs (A1-A4) indépendants, **en ce que** les données de mesure déterminées par le capteur (A1-A4) respectif sont comparées entre elles et vérifiées quant à leur cohérence, et **en ce que** le ou les paramètres déterminés ou calculés sont transmis de façon redondante par le biais du moyen d'émission (14) au moyen de réception (21) et/ou fournis par la passerelle (24) à la commande (28) de la machine d'usinage.

22. Procédé selon la revendication 21, **caractérisé en ce qu'**une vérification de la cohérence comporte un contrôle de la concordance des paramètres déterminées et comparés entre eux, après leur traitement par les deux unités de microprocesseur (15, 16) indépendantes du moyen d'émission (14).

23. Procédé selon la revendication 22, **caractérisé en ce que** le ou les paramètres déterminés ou calculés sont transmis de façon redondante et sous forme de paquets de données par le biais du moyen d'émission (14) au moyen de réception (21), et **en ce que** la cohérence des données transmises est vérifiée côté réception.

24. Procédé selon la revendication 23, dans lequel le moyen de réception (21) comporte une passerelle (24), **caractérisé en ce qu'**en cas de concordance des paramètres déterminés et comparés entre eux et d'atteinte de valeurs de mesure prédéfinies, un signal de validation pour un fonctionnement sûr est produit par le biais de la passerelle (24) et transmis de façon redondante à la commande (28) de la machine d'usinage.

25. Procédé selon la revendication 24, **caractérisé en ce que** la passerelle (24) délivre le signal de validation sous la forme d'un signal binaire, dans lequel le signal de validation prend la valeur de 1 lorsque les valeurs de mesure détectées sont cohérentes et atteignent une valeur prédéfinie, et dans lequel le signal de validation prend la valeur de 0 lorsque les valeurs de mesure détectées ne sont pas cohérentes ou n'atteignent pas une valeur prédéfinie.
